(19) Europäisches Patentamt
European Patent Office
Office européen des brevets

(11) EP 3 011 004 B2

(12) # NEW EUROPEAN PATENT SPECIFICATION

After opposition procedure

(45) Date of publication and mention of the opposition decision:
**01.07.2020 Bulletin 2020/27**

(45) Mention of the grant of the patent:
**26.07.2017 Bulletin 2017/30**

(21) Application number: **14732322.4**

(22) Date of filing: **13.06.2014**

(51) Int Cl.:
***C11D 3/39*** (2006.01) ***C11D 3/16*** (2006.01)
***C11D 17/00*** (2006.01) ***B01J 21/16*** (2006.01)
***B01J 31/18*** (2006.01) ***B01J 31/26*** (2006.01)
***B01J 31/22*** (2006.01)

(86) International application number:
**PCT/GB2014/051819**

(87) International publication number:
**WO 2014/202954 (24.12.2014 Gazette 2014/52)**

(54) **BLEACH AND OXIDATION CATALYST**

BLEICH- UND OXIDATIONSKATALYSATOR

CATALYSEUR D'OXYDATION ET DE BLANCHIMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.06.2013 EP 13173074**

(43) Date of publication of application:
**27.04.2016 Bulletin 2016/17**

(73) Proprietor: **Catexel Technologies Limited**
**London**
**EC4A 3AE (GB)**

(72) Inventors:
- **HAGE, Ronald**
**NL-2333 BD Leiden (NL)**
- **GAULARD, Fabien Pierre Guy**
**NL-2333 BD Leiden (NL)**

(74) Representative: **McNab, Donald C. et al**
**Marks & Clerk LLP**
**40 Torphichen Street**
**Edinburgh EH3 8JB (GB)**

(56) References cited:
**EP-A1- 0 170 346**
**WO-A1-94/21777**
**WO-A1-95/06711**
**WO-A1-95/27774**
**WO-A1-95/30733**
**WO-A1-2006/125517**
**US-A- 5 246 621**

EP 3 011 004 B2

## Description

### FIELD

The present invention concerns a method of making manganese ion-containing catalyst salts, which comprise a mononuclear or dinuclear Mn (III) and/or Mn (IV) complex based on cyclic triamine ligands and a non-coordinating silicate-based counterion. The invention also concerns compositions comprising such salts and bleaching formulations comprising the salt and a peroxy compound. The salt, and formulations comprising it, are suitable for use in catalysing oxidation, for example as a component of a laundry or dishwasher bleaching composition. The invention further relates to methods of oxidising with the bleaching formulations described herein.

### BACKGROUND

Dinuclear manganese catalysts based on triazacyclononane ligands are known to be active catalysts in the bleaching of stains in laundry detergent products and in dishwash products and for treatment of cellulosic substrates in e.g. wood-pulp or raw cotton (see for example EP 0 458 397 A2 (Unilever NV and Unilever plc) and WO 2006/125517 A1 (Unilever pic *et al.*).

Since these catalysts are very effective, only small amounts of them need to be used in bleaching detergent or dishwash formulations, often at levels less than 0.1 wt% in the detergent or dishwasher formulation. A difficulty arising from the use of such low dosing is achieving accurate dosing of the catalyst and homogeneous distribution throughout the formulation. When distribution of the catalyst is heterogeneous in a formulation, the use of such detergent formulations in a washing machine or in handwashing can lead to underdosing (i.e. giving a poorer bleaching performance) or overdosing of the catalyst (i.e. giving rise to excessive hydrogen peroxide decomposition and possibly brown spotting).

A well-known approach to circumvent this potential problem is the presentation/inclusion of the solid catalyst on a solid support in bleaching formulations.

For example, there is described in EP 0 544 440 A2 (Unilever plc and Unilever N.V.) the provision of a bleach catalyst composition in the form of non-friable composite granules comprising a manganese complex catalyst; a binding agent selected from water-soluble and non-oxidisable polymers, alkali metal silicates, fatty acid/soap mixtures and mixtures thereof; and optionally an inert salt, such as a chloride- or carbonate-containing salt. Preferred salts described are hexafluorophosphate ($PF_6^-$) salts and there is described the granulation of a mixture of unsieved light soda ash and a dinuclear manganese catalyst hexafluorophosphate salt with alkaline sodium silicate solution.

WO 94/21777 A1 (Unilever N.V. and Unilever plc) describes the formation of granules comprising a dinuclear manganese complex salt, typically as a $PF_6^-$ salt; a carrier material, selected from zeolite, alkali metal sulphate, citric acid, succinic acid and starch; and a binding agent selected from water-soluble non-oxidisable polymers, alkali metal silicates, saturated fatty acids fatty acid soaps and mixtures thereof.

Additionally, WO 95/06710 A1 and WO 95/06711 A1 (both Unilever pic and Unilever N.V.) describe non-friable granules comprising of a manganese complex catalyst, and either a water-soluble binding agent and an inert solid or a hydrophobic binding agent and a non-deliquescent or non-hygroscopic soluble core material.

WO 95/30733 A1 (Unilever N.V. and Unilever plc) describes a bleach composition comprising the adsorption product of a porous material with active ionic sites and a manganese complex catalyst. Porous materials described include silicas, zeolites, natural silicates and clays. The use of silica gels is recommended, in particular hydrothermally treated hydrogels. Those of the so-called S- and G-types of described as particularly preferred.

There remains a need in the art of bleaching formulations, for example of use in laundry and dishwashing applications, to ensure accurate dosing of highly effective manganese-based bleach activating catalysts whilst permitting useful stability of the catalysts upon storage. The present invention is intended to address these needs.

### SUMMARY

We have surprisingly found that the mononuclear or dinuclear manganese complexes described herein may be usefully stabilised by contacting them with calcium silicates. Moreover, we have found that complexes treated in this way maintain catalytic activity towards oxidising (e.g. bleaching) for useful periods of storage time.

Viewed from a first aspect, therefore, the invention provides a method comprising contacting, in an aqueous liquid, a calcium silicate with a salt comprising a mononuclear or dinuclear Mn (III) and/or Mn (IV) complex of a ligand of formula (I):

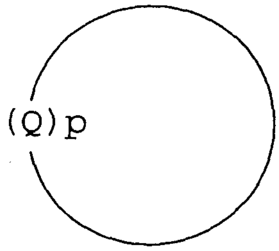 (I)

,

wherein:

Q = 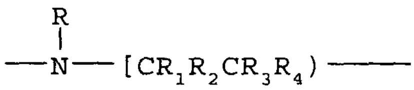 ;

p is 3;

R is independently selected from the group consisting of hydrogen, $C_1$-$C_{24}$alkyl, $CH_2CH_2OH$ and $CH_2COOH$; or one R is linked to the nitrogen atom of another Q of another ring of formula (I) via a $C_2$-$C_6$ alkylene bridge, a $C_6$-$C_{10}$ arylene bridge or a bridge comprising one or two $C_1$-$C_3$ alkylene units and one $C_6$-$C_{10}$ arylene unit, which bridge may be optionally substituted one or more times with independently selected $C_1$-$C_{24}$ alkyl groups; and

$R_1$, $R_2$, $R_3$, and $R_4$ are independently selected from H, $C_1$-$C_4$alkyl and $C_1$-$C_4$-alkylhydroxy; and

drying the resultant composition,
wherein the salt comprises one or more non-coordinating counterions, which are selected from the group consisting of $Cl^-$, $NO_3^-$, $SO_4^{2-}$ and acetate.

Viewed from a second aspect, the invention provides a composition obtainable by a method according to the first aspect of the invention.

Viewed from a third aspect, the invention provides a bleaching formulation comprising a composition according to the second aspect of the invention.

Viewed from a fourth aspect, the invention provides a method comprising contacting a substrate with water and a bleaching formulation according to the third aspect of the invention.

Further aspects and embodiments of the present invention will be evident from the discussion that follows below.

## DETAILED DESCRIPTION

As summarised above, the present invention is based, in part, on the finding that mononuclear or dinuclear manganese complexes of ligands of formula (I) described herein may be usefully stabilised by contacting them with calcium silicates, and that the resultant compositions maintain catalytic activity towards oxidising (bleaching) for useful periods of time.

The method of the first aspect of the invention comprises contact of a manganese-based complex with the alkaline earth metal silicate, which is a calcium silicate. Silicates of alkaline earth metals are widely available commercially, a large number of silicate minerals being abundant on Earth. Many commercially available alkaline earth metal silicates are thus of natural origin although synthetic (i.e. man-made) alkaline earth metal silicates can be prepared without undue burden by the skilled person, for example by calcining the relevant oxide with silica at an elevated temperature.

By silicate is meant herein, as it is understood in the art, an anion consisting of one or more $SiO_4$ tetrahedra, or, exceptionally, $SiO_6$ octahedra. In the subsequent discussion, emphasis is placed on silicates consisting of $SiO_4$ tetrahedra. It will be understood that the term "silicate" does not embrace aluminosilicates or silica, e.g. silica gels or hydrogels.

The simplest silicates, known as orthosilicates or nesosilicates, comprise isolated $(SiO_4)^{4-}$ tetrahedra. More complex silicate anions comprise two or more $SiO_4$ tetrahedra linked by bridging oxygen atoms, i.e. oxygen atoms that are part of two or more $SiO_4$ tetrahedra. The simplest of these complex, polyanionic silicate anions consists of two $SiO_4$ tetrahedra with a common bridging oxygen atom, i.e. the species $(O_3Si\text{-}O\text{-}SiO_3)^{6-}$. Silicates comprising this species are known as disilicates or sorosilicates. Many more complex silicates exist, such as silicates comprising chains of $SiO_4$ tetrahedra linked by bridging oxygen atoms, known as inosilicates; cyclic silicates, for example those comprising three or six $SiO_4$ tetrahedra; and sheet-like or three-dimensional (framework) silicates, arising from bridging involving three or four of the oxygen atoms of constituent $SiO_4$ tetrahedra. Minerals found throughout the Earth's crust comprise silicate

anions, including the types just described, and of widely varying stoichiometries.

As used herein, the term "alkaline earth metal silicates" embraces compounds consisting, or consisting essentially of, silicate anions, as described above, and one or more alkaline earth metal cations. Such silicates may be optionally in hydrated form. By way of an example to illustrate what is meant by alkaline earth metal silicates consisting essentially of silicate anions and one or more alkaline earth metal cations, the mineral wollastonite, a commonly used calcium inosilicate of empirical formula $CaSiO_3$, can comprise small amounts of other metal ions (which may be thought of as partially substituting some of the calcium ions denoted by the empirical formula $CaSiO_3$), but not to such an extent as to materially affect the essential characteristics of the silicate, i.e. its recognition and classification as a calcium inosilicate of empirical formula $CaSiO_3$.

Typically, alkaline earth metal silicates used according to the present invention will consist or consist essentially of a single type of alkaline earth metal cation, such as calcium in wollastonite. Typically, alkaline earth metal silicates used will consist or consist essentially of a single type of alkaline earth metal cation. However, this is not an essential feature of the invention and the skilled person is aware that mixed alkaline earth metal silicates consisting, or consisting essentially, of a plurality (e.g. two different kinds) of alkaline earth metal cations are available commercially and/or may be made synthetically. For example, monticellites are orthosilicates, most of which consist essentially of orthosilicate and calcium and magnesium ions.

As is known, the alkaline earth metals are beryllium, calcium, strontium, magnesium, barium and radium

According to the invention a calcium silicate is used. As alluded to above, some of the commercially available calcium silicate is the natural calcium inosilicate wollastonite (of formula $CaSiO_3$). However, other common forms of calcium silicate are commercially available, including calcium silicates of empirical formulae $Ca_2SiO_4$ and $Ca_3SiO_5$. Often, calcium silicates occur in hydrated form with varying percentages of water of crystallisation. Often, calcium silicates available commercially are synthetic.

Calcium orthosilicate ($Ca_2SiO_4$) is sold under various trade names including Silene, Cal-Sil (or Calsil) and Microcal (for example Microcal ET) and is typically manufactured synthetically.

Magnesium silicate is often found naturally in hydrated form, for example as the mineral talc. Synthetic magnesium silicates are also commercially available, typically as hydrates.

The silicates described herein may be of natural origin or may be synthetic. Use of mixtures of any of the silicates described herein is also contemplated according to the present invention although, for convenience rather than out of necessity, mixtures of silicates are typically not used.

Typically, the alkaline earth metal silicates used in accordance with the method of the first aspect of the invention are used in particulate form, i.e. in the form of finely divided solid material, for example granular or powdered solid material having mean particle sizes of between about 0.001 $\mu$m to about 1 mm. Use of such particulate solid allows control over the extent of interaction between the silicate and the salt when the two are contacted. Particle sizes may be measured by a laser diffraction particle size analyser, for example a Malvern HP equipped with a 100 mm lens.

The method of the first aspect of the invention involves contacting a calcium silicate with a salt comprising a mononuclear or dinuclear Mn (III) and/or Mn (IV) complex. The complex comprises one or two ligands of formula (I) as herein defined.

According to particular embodiments, each R is independently selected from the group consisting of hydrogen, $C_1$-$C_{24}$alkyl, $CH_2CH_2OH$ and $CH_2COOH$; or one R is linked to the nitrogen atom of another Q of another ring of formula (I) via an ethylene or a propylene bridge. According to other embodiments, each R is independently selected from the group consisting of hydrogen, $C_1$-$C_6$alkyl, $CH_2CH_2OH$ and $CH_2COOH$; or one R is linked to the nitrogen atom of another Q of another ring of formula (I) via an ethylene or a propylene bridge. According to other embodiments, R is independently selected from the group consisting of $C_1$-$C_{24}$alkyl, $CH_2CH_2OH$ and $CH_2COOH$; or one R is linked to the nitrogen atom of another Q of another ring of formula (I) via an ethylene or a propylene bridge. According to other embodiments, each R is independently selected from: $CH_3$, $C_2H_5$, $CH_2CH_2OH$ and $CH_2COOH$. According to other embodiments, each R is independently selected from the group consisting of $C_1$-$C_6$alkyl, in particular methyl; or one R is linked to the nitrogen atom of another Q of another ring of formula (I) via an ethylene or a propylene bridge. Where one R is linked to the nitrogen atom of another Q of another ring of formula (I), this is typically via an ethylene bridge. In such embodiments, the other R groups, including those in the other ring of formula (I), are the same, typically $C_1$-$C_6$alkyl, in particular methyl.

According to further particular embodiments, including each of those particular embodiments described in the immediately preceding paragraph, $R_1$, $R_2$, $R_3$, and $R_4$ are independently selected from hydrogen and methyl, in particular embodiments in which each of $R_1$, $R_2$, $R_3$, and $R_4$ is hydrogen.

When a ligand of formula (I) comprises one group R linked to the nitrogen atom (i.e. N) of another Q of another ring of formula (I) via a bridge, it will be understood that such ligands of formula (I) in particular embodiments comprising an ethylene bridge may alternatively be represented by the following structure:

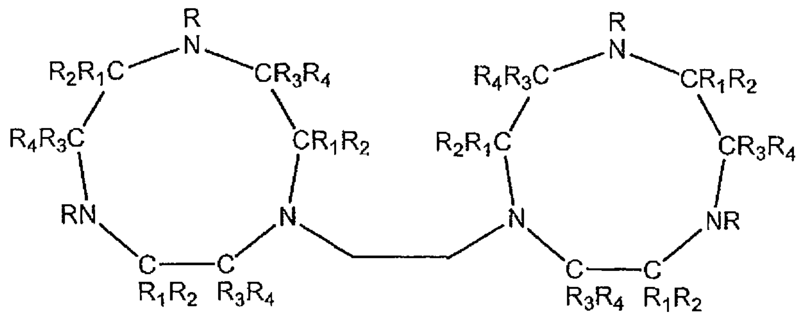

wherein R, $R_1$, $R_2$, $R_3$, and $R_4$ are as herein defined, including the various specific embodiments set out.

Where a bridge is present in the ligands of formula (I) this may be a $C_2$-$C_6$ alkylene bridge. Such alkylene bridges are typically although not necessarily straight chain alkylene bridges as discussed below. They may, however, be cyclic alkylene groups (e.g. the bridge may be cyclohexylene). Where the bridge is a $C_6$-$C_{10}$ arylene bridge, this may be, for example, phenylene or the corresponding arylene formed by abstraction of two hydrogen atoms from naphthalene. Where the bridge comprises one or two $C_1$-$C_3$ alkylene units and one $C_6$-$C_{10}$ arylene unit, such bridges may be, for example, $-CH_2C_6H_4CH_2-$ or $-CH_2C_6H_4-$. It will be understood that each of these bridges may be optionally substituted one or more times, for example once, with independently selected $C_1$-$C_{24}$ alkyl (e.g. $C_1$-$C_{18}$ alkyl) groups.

In the ligands of formula (I), the bridge is typically a $C_2$-$C_6$ alkylene bridge. Where this is so, the bridge is typically a straight chain alkylene, e.g. is ethylene, *n*-propylene, *n*-butylene, *n*-pentylene or *n*-hexylene. According to particular embodiments, the $C_2$-$C_6$ alkylene bridge is ethylene or n-propylene. According to still more particular embodiments, the $C_2$-$C_6$ alkylene bridge is ethylene. Herein, references to propylene are intended to refer to *n*-propylene (i.e. $-CH_2CH_2CH_2-$, rather than $-CH(CH_3)CH_2-$) unless the context expressly indicates to the contrary.

According to particular embodiments of the invention, the ligand of formula (I) is 1,4,7-trimethyl-1,4,7-triazacyclononane ($Me_3$-TACN) or 1,2-bis(4,7-dimethyl-1,4,7-triazacyclonon-1-yl)-ethane ($Me_4$-DTNE). According to still more particular embodiments of the invention, the ligand of formula (I) is $Me_3$-TACN.

The salt with which the alkaline earth metal silicate is contacted in accordance with the method of the first aspect of the invention may comprise a mononuclear or a dinuclear complex comprising the ligand of formula (I). The skilled person is very familiar with salts of such complexes, which may be made *in situ,* without isolation, or be well-defined.

By a well-defined complex is meant herein (as the term is used customarily in the art) a complex that has been isolated such that it is susceptible to characterisation (i.e. definition) and analysis (e.g. to determine its structure and degree of purity). In contrast, a complex that is not well-defined is one that is prepared without isolation from the medium (e.g. reaction medium) in which it is prepared.

According to particular embodiments of the invention, the alkaline earth metal silicate is contacted with a well-defined salt, a number of which are commercially available from, for example PQ Corporation, Alfa Aesar and Evonik.

Typically, the complex is a dinuclear complex and the subsequent discussion focuses on these. However, the use of salts of mononuclear manganese ion-containing complexes is also within the scope of the present invention. Examples of such complexes are described in EP 0 549 271 A1, EP 0 549 272 A1, EP 0 544 519 A2 and EP 0 544 440 A2.

Where the salt with which the alkaline earth metal silicate is contacted is a dinuclear complex, i.e. comprises two manganese ions, each of these ions may be Mn (III), each of these may be Mn(IV) or one ion may be Mn (III) and one Mn(IV).

The salt with which the alkaline earth metal silicate is contacted comprises both coordinating ligands (i.e. which coordinate to one or two manganese ions in the complex of the salt) and non-coordinating ligands (i.e. which do not coordinate to a manganese ion).

Mononuclear complexes comprise one coordinating ligand of formula (I). Dinuclear complexes comprise either two coordinating ligands of formula (I), or one coordinating ligand of formula (I) where this comprises one group R linked to the nitrogen atom of another Q of another ring of formula (I) via a bridge, as described herein, e.g. is $Me_4$-DTNE.

Additionally, both mononuclear and dinuclear complexes comprise additional coordinating ligands. For dinuclear complexes, these are typically oxide ($O^{2-}$) or $C_{1-6}$carboxylate (i.e. $RCO_2^-$ wherein R is an alkyl group) ions, which bridge the two manganese ions. Where present, an alkylcarboxylate ion is typically acetate. Typically, dinuclear complexes comprise two or three bridging oxide ions. For example, dinuclear manganese ion-containing complexes may comprise two oxide ions and one acetate ion, each of which bridges the two manganese ions; or three oxide ions, each of which bridges the two manganese ions.

According to particular embodiments of all aspects of the invention, there is contemplated the use of dinuclear manganese ion-containing complexes comprising two ligands of formula (I) which do not comprise one group R linked to the nitrogen atom of another Q of another ring of formula (I) via a bridge, for example $Me_3$-TACN, in which the manganese ions are bridged by three oxide ions. According to particular embodiments, such complexes comprise two

Mn (IV) ions. For example, the complex of the salt that is contacted with the alkaline earth metal silicate may be $[Mn^{IV}Mn^{IV}(\mu\text{-}O)_3(Me_3\text{-}TACN)_2]^{2+}$, "$\mu$" denoting, according to convention, a bridging ligand.

According to other particular embodiments of all aspects of the invention, there is contemplated the use of dinuclear manganese ion-containing complexes comprising one ligand of formula (I) which does comprises one group R linked to the nitrogen atom of another Q of another ring of formula (I) via a bridge, for example $Me_4$-DTNE, in which the manganese ions are bridged by two oxide ions and one acetate ion. According to particular embodiments, such complexes comprise one Mn (IV) ion and one Mn (III) ion. For example, the complex of the salt that is contacted with the alkaline earth metal silicate may be $[Mn^{III}Mn^{IV}(\mu\text{-}O)_2(\mu\text{-}CH_3COO)(Me_4\text{-}DTNE)]^{2+}$.

The mononuclear or dinuclear manganese ion-containing complex of the salt has an overall positive charge, which is balanced by one or more non-coordinating counteranions, which are selected from the group consisting of $Cl^-$, $NO_3^-$, $SO_4^{2-}$ and acetate.

Transition metal catalyst salts having significant water-solubility, such as at least 30 g/l at 20 °C, e.g. at least 50 g/l at 20 °C or at least 70 g/l at 20 °C, are described in WO 2006/125517 A1. The use of such highly water-soluble salts, for example those comprising small counterions such as chloride, nitrate, sulfate and acetate, can be advantageous since their high water solubilities mean, for example, that more concentrated solutions of the salts can be used when contacting them with the alkaline earth metal silicate than when using poorly water-soluble salts, such as those comprising the $PF_6^-$ ion. For example, $[Mn^{IV}Mn^{IV}(\mu\text{-}O)_3(Me_3\text{-}TACN)_2]^{2+}(PF_6^-)_2$ has a water solubility of only 10.8 g/l at 20 °C. Moreover, salts of anions such as $PF_6^-$ are typically formed by introduction of the $PF_6^-$ ion as a potassium salt after the formation of the manganese ion-containing complex, which leads to precipitation of the resultant salt. This precipitate is then typically redissolved, for example in water, prior to contacting with the alkaline earth metal silicate. Such additional steps introduce complexity and cost, as well as often occasioning the use of relatively large volumes of water or other solvent, since the solubility (in water) of manganese catalyst salts described herein that comprise $PF_6^-$ non-coordinating counterions is quite low.

The contacting according to the method of the first aspect of the invention serves to exchange at least a proportion of the cationic alkaline earth metal ions of the alkaline earth metal silicate, typically $Ca^{2+}$ and/or $Mg^{2+}$, for the cationic manganese ion-containing complexes described herein. Visually this can be observed by way of a change in the colour of the silicate upon the contacting, from white to red or green coloured. The colour of the resultant product depends on the complex used. For example, the colour can range from orange-like (for a dinuclear $Me_3$-TACN manganese complex comprising three bridging and coordinating $O^{2-}$ ions, to violet-pink for the dinuclear $Me_3$-TACN manganese complex with one bridging and coordinating $O^{2-}$ ion and two bridging and coordinating acetate ions, and green for $Me_4$-DTNE comprising two $O^{2-}$ and one acetate bridging and coordinating ions. As will be understood, the intensity of the resultant product depends on the intensity of the colour of the manganese complex (i.e. the molar extinction coefficients of the peaks in the visible light region), as well as the weight ratio of manganese complex added to silicate. Cation exchange is also evidenced by a detectable increase in the quantity of alkaline earth metal cations after the contacting with the manganese complex (see Example 5 below in the experimental section.

Without wishing to be bound by theory, it is understood that a component of the composition resultant from conducting a method according to the first aspect of the invention is a different salt from that with which the alkaline earth metal silicate is contacted, i.e. a second salt of the complex, having a non-coordinating silicate counterion derived from the alkaline earth metal silicate.

As will be understood, the quantity of the salt of the complex having a non-coordinating silicate counterion present in the composition resultant from conducting the method according to the first aspect of the invention will relate to the relative stoichiometries of the alkaline earth metal silicate and salts that are contacted with one another. Thus, for example, when using calcium or magnesium silicates, some of the $Ca^{2+}$ or $Mg^{2+}$ ions will be substituted by the cationic manganese complex. If the manganese ion-containing complex has an overall charge of +2, it is expected that, for each $Ca^{2+}$ or $Mg^{2+}$ ion that is released from the calcium or magnesium silicate, one manganese ion-containing complex will take its place (so as to preserve the charge neutrality of the silicate-containing material). It should be noted that if additional salts are present in the solid or liquid containing the manganese ion-containing salt (simple inorganic salts such as sodium chloride are, for example, sometimes present in commercially available manganese complex ion-containing salts of the type described herein), this may lead to additional exchange of calcium ions.

Any liquid medium in which the contacting is effected will comprise alkaline earth metal ions and non-coordinating anionic counterions from the manganese ion-containing salt. As an example, if a calcium silicate is added to an aqueous solution of a manganese ion-containing catalyst salt, comprising acetate as a non-coordinating counterion, and all of the manganese complex were bound to the silicate anions of the reactant calcium silicate, an aqueous solution of calcium acetate would be formed (together with a solid silicate salt of the manganese ion-containing complex).

It is, of course, possible to add fewer molar equivalents of the cationic manganese ion-containing complex than the theoretical (stoichiometric) amount of exchangeable cationic groups that can be released from the silicate material. Also, it will be recognised by the skilled person that less than the theoretical stoichiometric amount of cationic groups present in an alkaline earth metal silicate will generally be exchangeable since some of these cations are buried within

the solid matrix of the alkaline earth metal silicate. Moreover, the skilled person will understand that the anionic component of many alkaline earth metal silicates, as may be understood from the foregoing discussion, may be regarded as polyanionic, comprising multiple negative charges resultant from sharing of oxygen atoms by contiguous $SiO_4$ tetrahedra. It will often be desirable to contact the alkaline earth metal silicate with intentionally sub-stoichiometric quantities of manganese ion-containing complexes (i.e. a molar quantity of manganese ion-containing complex less than that calculated or otherwise anticipated to be required (given the nature of the alkaline earth metal silicate)). Also, it may be the case that less than all of the manganese complex present in the composition according to the second aspect of the invention is subsequently releasable, for example when conducting a method in accordance with the fourth aspect of the invention. The skilled person can take into account these factors when conducting the method according to the first aspect of the invention, i.e. to adjudge the appropriate quantity of materials to mix in accordance with the method.

The contacting according to the first aspect of the invention is effected in an aqueous liquid. Suitable liquids include polar liquids, such as water or water/alcohol mixtures (in particular mixtures comprising $C_{1-6}$ alcohols, for example methanol, ethanol and *n*- and *iso*propanol). As described in WO 2011/106906 A1, the manganese complexes may be synthesised in water/alcohol (e.g. water/ethanol) mixtures, or even in mainly non-aqueous solvents. Such solutions may be contacted with the alkaline earth metal silicates described herein. The contacting is effected in an aqueous liquid, i.e. a liquid comprising water, typically more than 50% water v/v, e.g. between about 50 and 100% water v/v. The pH of such an aqueous liquids is typically between about 2 and about 8. Often, particularly when using the advantageously water-soluble salts described herein, contacting of the salt with the alkaline earth metal silicate may be effected by mixing of salt and the silicate in liquids in which the only liquid is water. Advantageously, such liquids may be buffered aqueous solutions, which maintain solutions of manganese ion-containing catalysts within the pH ranges of about 2 to about 8. Examples of appropriate buffered solutions include phosphate-or carboxylate-containing buffers, for example acetate, benzoate and citrate buffers. Manganese ion-containing catalyst salts of the type described herein are commercially available as well-defined salts in buffered solutions.

According to particular embodiments of the invention, therefore, the manganese ion-containing salt may be provided as an aqueous solution, for example a buffered aqueous solution of the type described immediately hereinbefore. To such solutions, which may be diluted with additional water (or other solvent) if desired, may be added an appropriate quantity of alkaline earth metal silicate and the resultant mixture mixed, for example by stirring, sonication, vortexing, shaking and the like for a suitable period of time.

Besides contacting a liquid-containing mixture (e.g. solution) of a manganese ion-containing salt with an alkaline earth metal silicate as described above, it will be understood that other methods of contacting will readily present themselves. For example, a solution of salt may be sprayed onto an alkaline earth metal silicate, optionally in a continuous process.

Appropriate conditions such as durations of and temperatures for the contacting will depend on the nature of the reactants (the salt and the alkaline earth metal silicate) and their quantities and can be established without undue burden by the skilled person. For example, durations of contacting may be between about 1 min and about 24 hours. Often, the contacting can be carried out at ambient temperature, for example at about 20 to 25 °C although elevated temperatures, for example between about 25 and about 50 °C may be used if desired.

Contacting according to the first aspect of the invention is effected in an aqueous liquid. The solid material present in the resultant mixtures will typically be separated, for example by filtration, decantation or centrifugation, from the liquid. Thereafter, the solid material is typically dried, optionally under reduced pressure, generally at a temperature of between about 30°C and 80°C, for example between about 40° C and 60°C, for between about 1 and 24 hours. Appropriate conditions can be established without undue burden by the skilled person.

As will be appreciated by the person skilled in the art, it may be desirable to subject compositions according to the second aspect of the invention to further processing, for example to make granules having beneficial properties, to include in the bleaching formulations of the invention, for example solid detergent formulations. Whilst compositions according to the second aspect of the invention can be included in the bleaching formulations as such owing to their excellent storage stability, the formulator may want to modify these particles further, for example, by mixing with a soluble binding/coating agent.

Accordingly, compositions according to the second aspect of the invention, of a desired particle size, may according to some embodiments be coated with a water-soluble material, which coating may optionally be provided with a water-dispersible surface powder coating. The skilled person is aware of suitable water-soluble materials and water-dispersible surface powder coatings, which are fully described, for example, in WO 95/06710 A1 and WO 95/30733 A1.

Thus the bleaching formulation of the invention may be in the form of non-friable composition granules comprising:

(i) a composition according to the second aspect of the invention;
(ii) a soluble binding/coating agent; and optionally
(iii) an inert solid.

By soluble binding agent is meant a binding agent that is water soluble or 0.5wt% of it will form a dispersion in a solution of 1 g of an ethoxylated non-ionic surfactant (Synperonic A7, ex Croda) in a liter of water.

Examples of suitable water-soluble binding agents include soap/fatty acid mixtures, polyethylene glycols of molecular weights in the range of 500 to 3000, tallow and coco ethanolamides and non-ionic surfactants such as ethoxylated non-ionic surfactants. Typically, the binding agent will be a melt binder with a melting point in the range 35 to 100 °C, more preferably 40 to 80 °C. An advantage of using a melt binding agent with a melting point above 35 °C is that it makes processing of the granules easier.

One example of a preferred binding agent consists of a mixture of a C12 and C18 fatty acid neutralised with sodium hydroxide; and in particular a 70:30 mixture of C12 : C18 fatty acid which is neutralised with sodium hydroxide in such an amount that the resultant mixture contains 30 wt-% soap.

Coating agents may comprise similar materials to the binding agents described above, but they also comprise materials such as starches, alginates, cellulose derivatives, fatty acids, waxes, paraffins, polyethylene glycols, gelating, electrolytes, polyelectrolytes.

By inert solid is meant a solid chemically inert to reaction with the other components of the granule. Typical inert materials include silicas, clays such as kaolin, alumina and titanium dioxide. It is also possible to use a combination of materials such as zeolite neutralised with citric acid. Often the inert solid material is insoluble in water.

The composition of the second aspect of the invention, optionally in the form of a non-friable composition as described above, is typically subject to grinding, pulverising or the like so as to provide a dried composition having a desired particle size. As is well-known in the art, where such compositions are to be introduced into solid bleaching formulations, such as powders for use in laundry, agglomerated particles comprising bleach-activating catalysts are desirably of approximately the same size and bulk density as the other components of a solid bleaching formulation, so as to avoid segregation by percolation or floating.

The composition of the second aspect of the invention is typically present in bleaching formulations according to the third aspect in a solid, generally particulate, form (for example as granules or powder), with mean particle sizes typically between 200 and 2500 $\mu$m, for example between 300 and 1500 $\mu$m. If the silicate-catalyst material is used in a liquid detergent, either as such, or formulated with a binding/coating agent optionally with an inert solid, the mean particle sizes are typically between 10 and 200 $\mu$m. Particle sizes may be measured by a laser diffraction particle size analyser, for example a Malvern HP equipped with a 100 mm lens.

Bulk density and size of the composition granules can be controlled via the composition, the process condition or both, as is known in the art.

The skilled person is well acquainted with suitable particle sizes and densities (and/or can determine appropriate sizes and densities through routine experimentation), and with suitable techniques to achieve these, for example through conventional granulation techniques. For example, suitable particles may be prepared by any conventional and/or known granulation techniques, such as using a pan granulator, fluidised bed, Schugi mixer, Lödige ploughshare mixture, rotating drum and other low energy mixers; by compaction, including extrusion and tabletting optionally followed by pulverising and grinding; when melt binding agents are used by prilling and pastilling using a Sandvik Roto Former; and by high shear-energy process using a high-speed mixer/granulator equipment having both a stirring action of high energy and a cutting action. Examples of such high-speed mixture/granulator equipment are the Fukae™, FS-G mixture manufactured by Fukae Powtech Kogyo Co, Japan. Other mixers usable in the process of the invention include the Diosna™, ex T.K. Fielder Ltd UK; the Fuji ™ VG-C Series ex Fuji Sangyo Co. Japan; and the Roto ™ ex Zanchete & Co S.r.l. Italy. Besides batch equipment, it is also possible to use a high speed mixer/granulator such as the Lödige Recycler.

The compositions obtainable according to the first aspect of the invention are of particular use when used in bleaching formulations, the manganese ion-containing complexes described herein serving to catalyse the oxidising activity of a peroxy compound, which may either be included within a bleaching formulation according to the present invention, or may be generated from such a bleaching formulation *in situ.*

Where a peroxy compound is present in a bleaching formulation of the invention, this may be, and typically is, a compound which is capable of yielding hydrogen peroxide in aqueous solution. Suitable amounts of peroxy compounds included within the bleaching formulation may be determined by the skilled person although typical quantities will be within the range of 1-35 wt%, for example 5-25 wt%, based on the solids content of the bleaching formulation. One of skill in the art will appreciate that smaller quantities of peroxy compounds may be used where the bleaching formulation comprises a bleaching system (discussed below) comprising a peroxy compound and a so-called bleach precursor.

Suitable hydrogen peroxide sources are well known in the art. Examples include the alkali metal peroxides, organic peroxides such as urea peroxide, and inorganic persalts, such as alkali metal perborates, percarbonates, perphosphates, persilicates, and persulfates. Typical peroxy compounds included within bleaching formulations are persalts, for example optionally hydrated sodium perborate (e.g. sodium perborate monohydrate and sodium perborate tetrahydrate) and sodium percarbonate. According to particular embodiments, the bleaching formulation comprises sodium perborate monohydrate or sodium perborate tetrahydrate. Inclusion of sodium perborate monohydrate is advantageous owing to its high active oxygen content. Use of sodium percarbonate is also advantageous for environmental reasons.

As an alternative to the use of inorganic persalts, organic peroxides may also be used. For example, alkylhydroxy peroxides are another class of peroxy bleaching compounds. Examples of these materials include cumene hydroperoxide and *t*-butyl hydroperoxide.

Organic peroxy acids may also serve as the peroxy compound. These may be mono- or diperoxyacids. Typical mono- or diperoxyacids are of the general formula HOO-(C=O)-R-Y, wherein R is an alkylene or substituted alkylene group containing from 1 to about 20 carbon atoms, optionally having an internal amide linkage or a phenylene or substituted phenylene group; and Y is hydrogen, halogen, alkyl, aryl, an imido-aromatic or non-aromatic group, a COOH or (C=O)OOH group or a quaternary ammonium group.

Typical monoperoxy acids include peroxy benzoic acids, peroxy lauric acid, N,N-phtaloylaminoperoxy caproic acid (PAP) and 6-octylamino-6-oxo-peroxyhexanoic acid. Typical diperoxy acids include for example: 1,12-diperoxydodecanoic acid (DPDA) and 1,9-diperoxyazeleic acid.

As well as organic peroxyacids, inorganic peroxyacids are also suitable, for example potassium monopersulfate (MPS).

if organic or inorganic peroxyacids are included within bleaching formulations, the amount of them incorporated in a bleaching formulation will typically be within the range of about 2-10 wt%, for example 4-8 wt%.

The bleaching formulation need not comprise a peroxy compound, however: a bleaching formulation of the invention may instead comprise a bleaching system constituted by components suitable for the generation of hydrogen peroxide *in situ,* but which are not themselves peroxy compounds. An example of this is the use of a combination of a $C_{1-4}$ alcohol oxidase enzyme and a $C_{1-4}$ alcohol, for example a combination of methanol oxidase and ethanol. Such combinations are described in WO 95/07972 A1 (Unilever N.V. and Unilever plc).

Often, a bleaching species is generated *in situ.* For example, organic peroxyacids are often generated *in situ,* as opposed to being included within the bleaching formulation, peroxyacids themselves tending to be insufficiently stable. For this reason, bleaching formulations often comprise a bleaching system comprising a persalt (e.g. sodium perborate (optionally hydrated) or sodium percarbonate), which yields hydrogen peroxide in water; and a so-called peroxy bleach precursor capable of reacting with the hydrogen peroxide to generate an organic peroxyacid.

The skilled person is very familiar with the use of bleaching systems comprising peroxy bleach precursors, peroxy bleach precursors being well known to the skilled person and described in the literature. For example, reference in this regard is made to British Patents 836988, 864,798, 907,356, 1,003,310 and 1,519,351; EP 0 185 522 A, EP 0 174 132 A, EP 0 120 591 A; and U.S. Patent Nos. 1,246,339, 3,332,882, 4,128,494, 4,412,934 and 4,675,393.

A useful class of peroxyacid bleach precursors is that of the cationic, quaternary ammonium-substituted peroxyacid bleach precursors described in U.S. Patent Nos. 4,751,015 and 4,397,757; and in EP 0 284 292 A and EP 0 331 229 A. Examples of peroxyacid bleach precursors of this class include 2-(N,N,N-trimethyl ammonium) ethyl sodium-4-sulphonphenyl carbonate chloride (SPCC) and N,N,N-trimethyl ammonium toluyloxy benzene sulfonate.

A further special class of bleach precursors is formed by the cationic nitriles described in EP 0 303 520 A, EP 0 458,396 A and EP 0 464,880 A. Other classes of bleach precursors for use with the present invention are described in WO 00/15750 A1, for example 6-(nonanamidocaproyl)oxybenzene sulfonate.

Typically, peroxy bleach precursors are esters, including acyl phenol sulfonates and acyl alkyl phenol sulfonates; the acyl-amides; and quaternary ammonium substituted peroxyacid bleach precursors, including the cationic nitriles. Examples of typical peroxyacid bleach precursors (sometimes referred to as peroxyacid bleach activators) are sodium-4-benzoyloxy benzene sulphonate (SBOBS); N,N,N',N'-tetraacetylethylenediamine (TAED); sodium 1-methyl-2-benzoyloxy benzene-4-sulfonate; sodium-4-methyl-3-benzoloxy benzoate; trimethylammonium toluyloxy benzene sulphonate; sodium-4-sulphophenyl carbonate chloride (SPCC); sodium nonanoyloxybenzene sulphonate (SNOBS); sodium, 3,5,5-trimethyl hexanoyloxybenzene sulphonate (STHOBS); and the substituted cationic nitriles. Often, bleach precursor compounds used are TAED and salts of nonanoyloxybenzene sulfonate (NOBS), e.g. the sodium salt SNOBS.

Where used, bleach precursor compounds are typically present in the bleaching formulation in an amount of up to 12 wt%, for example from 2-10 wt%, of the composition, based on the solids content of the bleaching formulation

Peroxy compounds or bleaching systems as described herein can be stabilised within the bleaching formulation by providing them with a protective coating, for example a coating comprising sodium metaborate and sodium silicate.

The compositions resultant from conducting a method according to the first aspect of the invention will often be intended for use in solid bleaching formulations. As will be understood, the solid content of these compositions will comprise unreacted alkaline earth metal silicate and manganese ion-containing salt that were contacted with one another; different silicate-containing and alkaline earth metal ion-containing salts resultant from the contacting; possibly additional solid material (for example arising from the presence of simple inorganic salts such as sodium chloride in the manganese ion-containing salts contacted with the alkaline earth metal silicate (as described hereinbefore)); and optionally water-soluble coating material with optional inert solid (as described hereinbefore).

The amount of the manganese ion-containing complex of the ligand of formula (I) present in these compositions will determine how much of the composition will need to be included in such solid detergent formulations. Using a composition comprising more than 20 wt% of manganese ion-containing complex will typically result in a requirement

for a low loading of the catalyst-containing material in the detergent formulation. A consequential disadvantage is an increased likelihood of heterogeneity of distribution of the catalyst in the bleaching formulation. This manifests itself in an undesirably variable result from using the detergent formulation. Conversely, using compositions with too low a level of manganese ion-containing complex, in particular less than 0.1 wt% of manganese ion-containing complex, will require the addition of an unnecessarily large amount of composition into the detergent formulation.

For these reasons, compositions according to the second aspect of the invention advantageously comprise between about 0.1 wt% and about 20 wt% of the manganese ion-containing complex, typically between about 0.3 wt% and about 10 wt% of the manganese ion-containing complex. These weight percentages are based on the weight of the manganese ion-containing complex with respect to the solids content of the composition of the second aspect of the invention.

According to particlar embodiments, bleaching formulations may be used for bleaching and/or modifying (e.g. degrading) polysaccharides (for example cellulose or starch) or polysaccharide-containing (for example cellulose-containing, also referred to herein as cellulosic) substrates. Cellulosic substrates are found widely in domestic, industrial and institutional laundry, wood-pulp, cotton processing industries and the like. For example, raw cotton (gin output) is dark brown in colour owing to the natural pigment in the plant. The cotton and textile industries recognise a need for bleaching cotton prior to its use in textiles and other areas. The object of bleaching such cotton fibres is to remove natural and adventitious impurities with the concurrent production of substantially whiter material.

Irrespective of the nature of the substrate treated in accordance with the method of the fourth aspect of the invention, it is the objective when doing so to effect bleaching, i.e. to remove unwanted chromophores (be they, for example, stains or solids on cloth in laundering or dishwashing applications; residual lignin in wood pulp or polyphenolic materials present in raw cotton and wood pulp and paper) and/or to degrade material, for example starch or polyphenolic materials in dishwashing. According to particular embodiments, therefore, the substrate may be a dirty dish or a polysaccharide- or polysaccharide-containing substrate, for example wherein the polysaccharide is a cellulosic substrate, such as cotton, wood pulp, paper or starch.

The bleaching formulation of the present invention may thus be used in a method of dishwashing. Such a method typically involves cleaning dishes in a mechanical dishwasher, often to remove starch and polyphenolic components from the dishes' surfaces. The term "dishes" herein embraces within its scope cookware as well as plates, crockery and other eating (e.g., cutlery) and serving tableware, for example items made of ceramic, metallic or plastics materials. Accordingly, embodiments of the fourth aspect of the invention include methods of cleaning dishes in a mechanical dishwasher, which comprise contacting the dishes with water and a bleaching formulation in accordance with the third aspect of the invention.

The bleaching formulation of the present invention may likewise be used in a method of cleaning textiles or non-woven fabrics, typically textiles. By textile is meant herein a woven or knitted fabric, that is to say a fabric with interlacing fibres resultant from weaving, knotting, crocheting or knitting together natural or artificial fibres. As is known in the art, textiles are distinguished by virtue of their method of manufacture from non-woven fabrics, which are also made of fibrous material and produced through bonding achieved by application of heat, mechanical pressure or chemical (including solvent) treatment. Accordingly, embodiments of the fourth aspect of the invention include methods of cleaning textiles or non-woven fabrics, typically in a mechanical washing machine, which comprise contacting a textile or non-woven fabric with water and a bleaching formulation in accordance with the third aspect of the invention.

The bleaching formulation of the present invention may be used in a method of bleaching and/or modifying (e.g. degrading) a compound generally, for example a cellulosic material or a polysaccharide or polysaccharide-containing material (e.g. starch). The cellulosic material may be, for example, cotton, wood pulp or paper. Accordingly, embodiments of the fourth aspect of the invention include methods of bleaching and/or modifying (e.g. degrading) such a material, which comprise contacting the material with water and a bleaching formulation in accordance with the third aspect of the invention.

In addition to a peroxy compound, or a bleaching system comprising a peroxy compound and a peroxycarboxylic acid precursor, such as TAED or NOBS, a typical bleaching formulation comprises other components which depend on the purpose for which the formulation is intended.

According to particular embodiments of the invention, the bleaching formulation is suitable for use, and may be used in, a method of cleaning textiles or non-woven fabrics, in particular for use in cleaning fabric, i.e. textiles or non-woven fabrics, for example clothes. Although it is to be understood that the invention is not to be considered to be so limited, where a bleaching formulation is intended for use in laundry or hard-surface cleaning applications, the bleaching formulation will typically comprise other components well understood by those of normal skill in the art, such as bleach stabilisers (also known as sequestrants), for example organic sequestrants such as aminophosphonate or a carboxylate sequestrants; one or more surfactants, for example cationic anionic or non-anionic (amphiphilic) surfactants; as well as other components, including (but not limited to) detergency builders, enzymes and perfuming agents.

Such a bleaching formulation will contain preferably between 0.1 and 50 wt-% of one or more surfactants. This bleaching formulation may comprise one or more anionic surfactants and one or more non-ionic surfactants. In genera!

the anionic and nonionic surfactants of the surfactant system may be chosen from the surfactants described in "Surfactant Active Agents, Vol 1 by Schwartz & Perry, Interscience 1949, vol 2 by Schwartz, Perry & Berch, Interscience 1958; in the current edition of "McCutcheon's Emulsifiers and Detergents" published by Manufacturing Confectioners Company; or in Tenside Taschenbuch, H. Stache, Carl Hauser Verlag, 1981. Examples of descriptions of suitable anionic and nonionic surfactants can for example be found in WO 03/072690 A1 (Unilever N.V. et al.), WO 02/068574 A1 (Unilever N.V. et al.) and WO 2012/048951 A1 (Unilever PLC et al.)

Those knowledgeable of bleaching formulations will be familiar with the use of enzymes in this context. Enzymes can provide cleaning performance, fabric care and/or sanitation benefits. Said enzymes include oxidoreductases, transferases, hydrolases, lyases, isomerases and ligases. Members of these enzyme classes are described in Enzyme Nomenclature 1992: Recommendations of the Nomenclature Committee of the International Union of Biochemistry and Molecular Biology on the Nomenclature and Classification of Enzymes, 1992, ISBN 0-1202271165-3, Academic Press. Detersive enzymes are described in greater detail in for example US Patent No 6,579,839 (Price et al.).

Suitable detergency builders as optional ingredients may also be present, for example as described in WO 00/34427 A1. Builders may include aluminosilicates, in particular zeolites, e.g. zeolite A, B, C, X and Y types, as well as zeolite MAP as described in EP 0 384 070 A; and precipitating builders such as sodium carbonate. Such builders are typically present in an amount from about 5 to about 80 wt-%, more preferably from about 10 to 50 wt-%, based on the solids content of the bleaching formulation.

The skilled person will be readily able to formulate a suitable bleaching formulation for use in laundry in accordance with his normal skill. Likewise, the skilled person will be readily able to formulate bleaching formulations suitable for use in the other applications described herein. Such formulations may, for example, comprise additional metal-ion based or organic catalysts suitable for catalysing the activity of the peroxy compounds described herein. Non-limiting examples of transition-metal based bleaching catalysts can be found for example in EP 2 228 429 A1 (Unilever PLC and Unilever N.V.), and references cited therein and examples of organic catalysts can be found in WO 2012/071153 A1 (The Procter & Gamble Company).

The non-limiting examples below more fully illustrate the embodiments of this invention. Examples 2.1b-2.1e and 4.1b-4.1e are not of the invention.

## EXPERIMENTAL

$[Mn_2(\mu\text{-}O)_3(Me_3TACN)_2](CH_3COO)_2$ (as a 3.5 wt-% aqueous solution in acetate buffer pH 5, made from 2.4 wt-% Na-acetate, 1.8 wt-% glacial acetic acid and adjusted to pH 5) was obtained as disclosed in WO 2006/125517 A1. $Me_3TACN$ = 1,4,7-trimethyl-1,4,7-triazacyclononane.

$[Mn_2(\mu\text{-}O)_2(\mu\text{-}CH_3COO)(Me_4DTNE)]Cl_2.H_2O$ (88% purity level) was prepared as disclosed in WO2011/106906 A1. $Me_4DTNE$ = 1,2-bis(4,7-dimethyl-1,4,7-triazacyclonon-1-yl)ethane.

Ca-silicate (Microcal ET) was obtained from PQ Corporation.

Mg-silicate (Macrosorb MS15 and Macrosorb MS33) was obtained from PQ Corporation. Another Mg-silicate material was obtained from Alfa Aesar (product code B22490, magnesium silicate activated for chromatography, 60-120 mesh, CAS 1343-88-0).

Aerosil® 380 silica was obtained from Evonik.

Talc (hydrated magnesium silicate $3MgO{\cdot}4SiO_2.H_2O$) was obtained from BDH Prolabo (Product code 28460.268).

Sandoclean PCJ (a.k.a. Imerol PCJ) was obtained from Clariant.

All other chemicals were obtained from standard chemical suppliers without further purification.

BC-1/cotton stains were obtained from CFT BV, Vlaardingen, The Netherlands.

### 1 PREPARATION OF VARIOUS CALCIUM SILICATES

#### 1a Preparation of hollow-sphere calcium silicate

The synthesis and properties of the hollow-sphere calcium silicates has been described in literature (M. Zhang & J. Chang, Ultrasonics Sonochemistry, 17, 789-792 (2010)).

0.6103 g of sodium metasilicate was brought into a beaker containing 500 mL of demineralized water. The solution was stirred until complete dissolution of the silicate and then 150 mg of cetyltrimethylammonium bromide (Applichem, product number A6284) was added. The solution was stirred again before the magnetic stirrer was removed and the solution was sonicated for 20 minutes. Once done, 0.37045 g of calcium hydroxide was brought into the beaker and the suspension was sonicated for another 2h. The solution was filtered using a Buchner funnel and a Whatman grade 50 filter and the solid was washed 3 times with 5 mL ethanol 96% and 3 times with 5 mL demineralized water. The solid was placed on a petri-dish before being dried in an oven at 50 °C for 2 days. After drying the solid was ground

and stored in a closed glass vial.

### 1b Preparation of calcium silicate

The procedure outlined below is similar to those described in WO 2006/078176 A1 (Victoria Link Limited) and by T. Borrmann, et al., J. Colloid and Interface Science, 339, 175-182 (2009).

A solution of sodium silicate was prepared by dissolving 6.103 g of sodium metasilicate (Sigma Aldrich, product number 307815) in 100 mL of demineralized water. A solution of calcium hydroxide was prepared by dissolving 3.7045 g $Ca(OH)_2$ in 90 mL of demineralized water. Once done, HCl 37% was added to adjust the pH to pH 11.5 (about 8.5 mL HCl 37% needed) followed by demineralized water to bring the volume of the solution to 100 mL. The solution of calcium hydroxide was stirred vigorously and the solution of sodium silicate was added. After about 20-30 minutes the stirring was reduced, the beaker glass was covered to avoid evaporation and the reaction was left to proceed overnight at room temperature. The next day the solution was filtered and the solid obtained was rinsed with copious amounts of demineralized water. The wet solid was weighted and split into four samples of equal weight. One of the samples was placed in a petri dish and stored in an oven at 50 °C overnight for drying. The next day the dry solid was ground to a fine homogeneous powder and stored in a closed glass vial at room temperature.

### 1c Preparation and post-treatment to pH 9 of calcium silicate of Exp. 1b

The procedure outlined below is similar to that described in WO 2006/078176 A1 (Victoria Link Limited).

The calcium silicate sample was prepared as explained in Experiment 1 b and was used for the post-treatment experiments without having been dried. To this sample, 50 mL of demineralized water was added and the solution was stirred to obtain a homogeneous dispersion. Then hydrochloric acid was added to bring the pH down to pH 9. The pH was kept steady for 5h before the suspension was placed in plastic bottles and centrifuged for 4 minutes at 3500 RPM (revolutions per minute) using a IEC (International Equipment Company) Centra MP4 centrifuge. The liquid phases were removed from the bottles, fresh demineralized water was added (about 60 - 70 mL) and the bottles were shaken to make sure that the solid was dispersed. The bottles were then centrifuged for another 4 minutes at 3500 RPM. The rinsing & centrifugation stage was repeated 3 other times before the gels were placed in petri dishes and left to dry in an oven at 50 °C overnight. The next day the dry samples were ground to a fine homogeneous powder and stored in a closed glass vial at room temperature.

### 1d Preparation and post-treatment to pH 10 of calcium silicate of Exp. 1b

The procedure as outlined in Experiment 1c was repeated, except for pH adjustment with HCl to pH 10 was done.

### 1e Preparation calcium silicate with subsequent reinforcement

The procedure outlined below is similar to that described in WO 2006/078176 A1 (Victoria Link Limited).

The calcium silicate sample was prepared as explained in Experiment 1b and was used for the post-treatment with sodium metasilicate without having been dried. 2.8 g of a solution of sodium metasilicate (same composition as described above in Experiment 1a) was poured in the beaker containing the dispersed sample of calcium silicate under stirring. The pH was immediately brought down to pH 10 using HCl 37% and maintained steady for 3h. Once done the solution was filtered using a Buchner funnel and a Whatman grade 50 filter. The solid obtained was rinsed with copious amounts of demineralized water before being placed on a petri dish and left to dry overnight in an oven at 50 °C. The next day the dry solid was ground and stored in a closed glass vial at room temperature.

## 2.1 ADSORPTION EXPERIMENTS of $[Mn_2(\mu\text{-}O)_3(Me_3TACN)_2](CH_3COO)_2$

### 2.1a Adsorption of $[Mn_2(\mu\text{-}O)_3(Me_3TACN)_2](CH_3COO)_2$ on Microcal ET silicate

100 mL of a diluted solution of $[Mn_2(\mu\text{-}O)_3(Me_3TACN)_2](CH_3COO)_2$ was prepared by mixing 25 mL of 3.37 wt-% $[Mn_2(\mu\text{-}O)_3(Me_3TACN)_2](CH_3COO)_2$ in acetate buffer pH 5 with 75 mL of demineralised water. Whilst stirring the solution, 1 g Microcal ET was poured on the walls of the vortex formed. This mixture was stirred for 30 min at room temperature. At the end of the reaction time the solution was filtered on a Buchner funnel to separate the solid from the liquid and the solid was left to dry in an oven at 50 °C overnight. Once done the solid was ground and placed in a 20 mL glass vial that was kept shut in an oven at 50 °C.

**2.1 b Adsorption of $[Mn_2(\mu\text{-}O)_3(Me_3TACN)_2](CH_3COO)_2$ on magnesium silicate (ex Alfa Aesar)**

Similar procedures to those described above (Experiment 2.1a) were followed using a magnesium silicate material (ex Alfa Aesar). The stability of the sample was then determined by testing the BC-1 (tea stain) bleaching performance on cotton after various times of storage at 50 °C.

**2.1c Adsorption of $[Mn_2(\mu\text{-}O)_3(Me_3TACN)_2](CH_3COO)_2$ on magnesium silicate (Macrosorb MS15)**

Similar procedures as described above (Experiment 2.1a) were followed using a magnesium silicate material (Macrosorb MS15, PQ corporation).

**2.1d Adsorption of $[Mn_2(\mu\text{-}O)_3(Me_3TACN)_2](CH_3COO)_2$ on magnesium silicate (Macrosorb MS33, PQ corporation)**

Similar procedures to those described above (Experiment 2.1a) were followed using a magnesium silicate material (Macrosorb MS33, PQ corporation).

**2.1e Adsorption of $[Mn_2(\mu\text{-}O)_3(Me_3TACN)_2](CH_3COO)_2$ on hydrated magnesium silicate, talc (BDH Prolabo)**

Similar procedures to those described above (Experiment 2.1 a) were followed using a hydrated magnesium silicate, talc (BDH Prolabo).

**2.1f Adsorption of $[Mn_2(\mu\text{-}O)_3(Me_3TACN)_2](CH_3COO)_2$ on the hollow-sphere calcium silicate sample prepared in Experiment 1a**

A catalyst solution was prepared by mixing 70 mL of demineralized water and 30 mL of $[Mn_2(\mu\text{-}O)_3(Me_3TACN)_2](CH_3COO)_2$ 3.5 wt%. Once done, 50 mL of this solution was placed in a 100 mL beaker. 0.5g of the hollow-sphere calcium silicate sample prepared as described in Experiment 1a was weighted. The catalyst solution was strongly stirred using a magnetic stirrer to form a vortex before the solid silicate sample was added. The stirring was reduced and the adsorption was left to proceed for 30 minutes at room temperature. The solution was then filtered on a Buchner funnel with a Whatman grade 50 filter and the solid that remained on the filter paper was placed on a petri dish stored overnight in an oven at 50 °C for drying. The next day the solid was ground to a fine homogeneous powder and stored in a closed glass vial at 50 °C.

**2.1g-j Adsorption of $[Mn_2(\mu\text{-}O)_3(Me_3TACN)_2](CH_3COO)_2$ on the calcium silicate samples prepared in Experiments 1b-1e**

A solution of diluted catalyst was prepared by mixing 212.5 mL demineralized water and 37.5 mL of of $[Mn_2(\mu\text{-}O)_3(Me_3TACN)_2](CH_3COO)_2$ 3.5 wt%. 4 samples of 50 mL were taken from the diluted catalyst solution and placed in 100 mL beakers. 0.5 g of each of the solids prepared in Experiment 1b-1e (i.e. sample without post-treatment, with post-treatment at pH 9, at pH 10 and sample reinforced with sodium silicate) was weighted. The solutions were stirred to form vortexes and the solids were poured in the different beakers. The adsorption took place for 30 minutes at room temperature. Once done, each solution was filtered using a Buchner funnel and a Whatman grade 50 filter before the solids were placed on petri dishes in an oven at 50 °C for overnight drying. The next day, the dry solids obtained were ground to fine homogeneous powders stored in closed glass vials at 50 °C.

**2.1k Adsorption of $[Mn_2(\mu\text{-}O)_3(Me_3TACN)_2](CH_3COO)_2$ on Aerosil® 380 silica (comparative experiment)**

100 mL of a diluted solution of $[Mn_2(\mu\text{-}O)_3(Me_3TACN)_2](CH_3COO)_2$ was prepared by mixing 24.4 mL of 3.3 wt-% $[Mn_2(\mu\text{-}O)_3(Me_3TACN)_2](CH_3COO)_2$ in acetate buffer pH 5 with 75.6 mL of demineralised water. The solution was stirred and 1 g Aerosil® 380 was poured on the walls of the vortex formed. The adsorption took place over 30 min at room temperature before the solution and solid were poured in a plastic bottle and placed in the centrifuge for 10 minutes at 4400 rpm. The liquid was decanted from the bottle, the red-coloured gel-type material was placed in a petri dish and left to dry overnight at 50 °C. Once done the solid was ground and placed in a 20 mL glass vial that was kept shut in an oven at 50 °C.

**2.1l Mixing $[Mn_2(\mu\text{-}O)_3(Me_3TACN)_2](CH_3COO)_2$ with disodium metasilicate (Aldrich, product code 307815, CAS 6834-92-0) (comparative experiment)**

100 mL of a diluted solution of $[Mn_2(\mu\text{-}O)_3(Me_3TACN)_2(CH_3COO)_2$ was prepared by mixing 25 mL of a 3.37 wt-% solution of $[Mn_2(\mu\text{-}O)_3(Me_3TACN)_2](CH_3COO)_2$ in acetate buffer pH5 with 75 mL of demineralised water. Whilst stirring the solution 1 g of the disodium metasilicate (Aldrich) was poured on the walls of the vortex formed and the adsorption was left to take place at room temperature for 30 minutes. At the end of the reaction time the solution was filtered on a Buchner funnel to separate the solid from the liquid and the solid was left to dry in an oven at 50 °C overnight. The remaining solution had a pH around 12 which is very high when compared to the pH obtained with most of the calcium and magnesium silicates tested (around pH 5 - 6). The next day the solid obtained presented dark spots suggesting the presence of manganese dioxide. For this reason the experiment was stopped since sodium silicate had proven unfit for the application.

**2.2 ADSORPTION EXPERIMENTS of $[Mn_2(\mu\text{-}O)_2(\mu\text{-}CH_3COO)(Me_4DTNE)]Cl_2.H_2O$**

**2.2a Adsorption of $[Mn_2(\mu\text{-}O)_2(\mu\text{-}CH_3COO)(Me_4DTNE)]Cl_2.H_2O$ on Microcal ET silicate**

0.4978g of $[Mn_2(\mu\text{-}O)_2(\mu\text{-}CH_3COO)(Me_4DTNE)]Cl_2.H_2O$ (purity 88.2%) was weighed and placed in a glass beaker with 100 mL water. Whilst stirring the solution, 1 g Microcal was poured on the walls of the vortex formed and the mixture was stirred at room temperature for 30 min. The solution was then centrifuged at 4400 rpm for 10 minutes and the green solid was placed in a petri dish for drying overnight in an oven at 50 °C. The next day the solid was ground and placed in a 20 mL glass vial that was kept closed in an oven at 50 °C. As the Microcal ET silicate contains calcium ions, it is assumed that these cations are exchanged by $[Mn_2(\mu\text{-}O)_2(\mu\text{-}CH_3COO)(Me_4DTNE)]^{2+}$.

**2.2b Preparation of $(Mn_2(\mu\text{-}O)_2(\mu\text{-}CH_3COO)(Me_4DTNE)]Cl_2.H_2O$ in acetate buffer pH 5 adsorbed onto Microcal ET**

Similarly to Experiment 2.2a, the catalyst was adsorbed on Microcal ET silicate, except for dissolution of the catalyst in an acetate buffer pH 5 prior the adsorption on silicate. An acetate buffer solution pH 5 was prepared by mixing 0.731 M sodium acetate (ex Merck) and 0.731 M acetic acid (ex Merck). The ratio of sodium acetate and acetic acid used was such that a pH of 5 was obtained. 0.5 gram $[Mn_2(\mu\text{-}O)_2(\mu\text{-}CH_3COO)(Me_4DTNE)]Cl_2$ (88.2%), was dissolved in 37.5 mL demineralized water and 12.5 mL of the acetate buffer pH 5 was added. To this solution 0.5 g Microcal ET silicate was added and the mixture was stirred for 30 min at RT. The solution was filtered over a Whatman #1 filter using a Buchner funnel. The solid material obtained was dried overnight at 50 °C. The next day the solid was crushed. Further storage was done at 50 °C.

**2.2c Adsorption of $[Mn_2(\mu\text{-}O)_2(\mu\text{-}CH_3COO)(Me_4DTNE)]Cl_2.H_2O$ on Aerosil® 380 silica (comparative experiment)**

0.4978g of $[Mn_2(\mu\text{-}O)_2(\mu\text{-}CH_3COO)(Me_4DTNE)]Cl_2.H_2O$ (purity 88.2%) was weighed and placed in a glass beaker with 100 mL water. Whilst stirring the solution, 1 g Aerosil® 380 silica was poured on the walls of the vortex formed and the adsorption was left to take place at room temperature for 30 min. The solution was then centrifuged at 4400 rpm for 10 minutes and the green gel-type material was placed in a petri dish for drying overnight in an oven at 50 °C. The next day the solid was ground and placed in a 20 mL glass vial that was kept closed in an oven at 50 °C.

The stability of the samples was then determined by testing the BC-1 (tea stain) bleaching performance on cotton after storage at 50 °C for various times (see also Section 3.1 below). Also stability tests on $(Mn_2(\mu\text{-}O)_2(\mu\text{-}CH_3COO)(Me_4DTNE)]Cl_2.H_2O$ adsorbed on Ca-silicate were done using a dye bleaching monitor (see Experiment 3.2). Comparison in stability was made by testing the storage stabilities of solid samples of the (semi-) pure catalysts stored in closed vials, $[Mn_2(\mu\text{-}O)_3(Me_3TACN)_2](CH_3COO)_2$ and $[Mn_2(\mu\text{-}O)_2(\mu\text{-}CH_3COO)(Me_4DTNE)]Cl_2.H_2O$.

**3 METHODS USED TO DETERMINE AMOUNT OF CATALYST ADSORBED OR RELEASED**

**3.1 Bleaching experiments**

The BC-1 (tea-stain) bleaching performance was measured as $\Delta R^*$ values at 460 nm, as disclosed elsewhere (EP 0 909 809 B (Unilever plc and Unilever N.V.), except for drying the BC-1 test cloths, drying in this case being achieved by drying overnight under ambient conditions.

In a typical experiment, in a beaker glass containing 100 ml of water, 0.048 g of Sandoclean PCJ (non-ionic surfactant), 0.101 ml of $H_2O_2$ (35 wt-%), NaOH solution (25 wt-%) to adjust to pH 11 and $[Mn_2(\mu\text{-}O)_3(Me_3TACN)_2]CH_3COO)_2$ or $[Mn_2(\mu\text{-}O)_2(\mu\text{-}CH_3COO)(Me_4DTNE)]Cl_2.H_2O$ were added respectively to this bleaching liquor to obtain

between 0 and 2.25 μM of the catalyst solution (see below for details). The time of the bleaching experiment was 14 min and the temperature was 40 °C. All experiments were done in duplication and the values given below are the average ΔR* values with the standard deviation in parentheses.

First calibration plots were made between 0 (blank) and 2.25 μM of each catalyst (the aqueous solutions contained also 0.48 g/l Sandoclean PCJ, 1.01 ml/l $H_2O_2$ (35%) at pH11, 14 min at 40 °C). This was done to test the performance of the catalyst adsorbed on the silicate material after different periods of storage time. Comparing with freshly prepared silicate material, a relative value of catalyst activity is obtained, which is then a measure for the stability of the catalyst adsorbed on the silicate material. Stability tests were done samples stored up to 9 weeks at 50 °C.

As a comparative example, stability after adsorption of the catalysts on a Aerosil® 380 silica was also measured.

The data of the calibration plots are as shown in Table 1 below:

**Table 1** ΔR* BC-1 bleaching results on BC-1 stains using various levels of $[Mn_2(\mu\text{-}O)_3(Me_3TACN)_2](CH_3COO)_2$ or $[Mn_2(\mu\text{-}O)_2(\mu\text{-}CH_3COO)(Me_4DTNE)]Cl_2$ for 14 min at pH 11.0 at 40°C (solution contains also 0.48 g/l Sandoclean PCJ, 1.01 ml/l $H_2O_2$ (35%)). The standard deviation of each experiment is given in parentheses.

| Concentration catalyst (μM) | $[Mn_2(\mu\text{-}O)_3(Me_3TACN)_2]^{2+}$ ΔR* | $[Mn_2(\mu\text{-}O)_2(\mu\text{-}CH_3COO)(Me_4DTNE)]^{2+}$ ΔR* |
|---|---|---|
| 0 | 6.9 (0.5) | 4.6 (0.5) |
| 0.25 | 12.8 (0.4) | 13.4 (0.4) |
| 0.5 | 16.4 (0.6) | 16.1 (0.8) |
| 0.75 | 18.8 (0.2) | 17.6 (0.4) |
| 1.00 | 19.8(0.2) | 19.2 (0.2) |
| 1.25 | 21.2 (0.4) | 20.0 (0.3) |
| 1.5 | 23.2 (0.7) | 20.7 (0.6) |
| 1.75 | 23.9 (0.2) | 21.5 (0.3) |
| 2.00 | 25.4 (0.1) | 21.8 (0.3) |
| 2.25 | 25.9 (0.3) | 22.4 (0.2) |
| N.B.: two different batches of BC-1 stains were used for the calibration plots of $[Mn_2(\mu\text{-}O)_3(Me_3TACN)_2](CH_3COO)_2$ and $[Mn_2(\mu\text{-}O)_2(\mu\text{-}CH_3COO)(Me_4DTNE)]Cl_2$ respectively, which resulted in slightly different values for the 0 catalyst level. The results described below have been based on the first set of BC-1 stains for all experiments using $[Mn_2(\mu\text{-}O)_3(Me_3TACN)_2]^{2+}$, and for the second set of BC-1 stains for all experiments using $[Mn_2(\mu\text{-}O)_2(\mu\text{-}CH_3COO)(Me_4DTNE)]^{2+}$. | | |

Further storage stability of the solid catalyst $[Mn_2(\mu\text{-}O)_3(Me_3TACN)_2]Cl_2.3H_2O$ was determined by using UV-vis spectroscopy (and comparing to a freshly prepared sample).

The storage stability of the solid catalyst $[Mn_2(\mu\text{-}O)_2(\mu\text{-}CH_3COO)(Me_4DTNE)]Cl_2.H_2O$ was determined by carrying bleaching experiments after different storage periods in closed vials using the data from the calibration plot explained in above.

### 3.2 Calibration plot: dye bleaching activity measurements by $[Mn_2(\mu\text{-}O)_2(\mu\text{-}CH_3COO)(Me_4DTNE)]^{2+}$

A carbonate buffer pH 10.5 was prepared by mixing 83.3 mM $NaHCO_3$ (ex Merck) and 83.3 mM $Na_2CO_3$ (ex Merck). The ratio of sodium hydrogen carbonate and sodium carbonate used was such that a pH of 10.5 was obtained.

In a quartz cuvette, 1600 uL carbonate buffer pH 10.5 (83.3 mM), 100 μL of Acid Blue 45 (2 g/L) (ex Aldrich), 100 uL $H_2O_2$ (1 M) (ex Merck), 100 μL DTPA (1.2 mM) (Dissolvine D40, ex Akzo Nobel) and 100 μL catalyst solution were added. The catalyst solution had a varying concentration between 0 and 80 (μM $[Mn_2(\mu\text{-}O)_2(\mu\text{-}CH_3COO)(Me_4DTNE)]Cl_2$ to obtain a calibration curve.

The bleaching of the dye at 30 °C was followed using the Agilent 8453 UV-Vis spectrophotometer in the kinetic mode taking a spectrum every 30 seconds. The absorbance of the peak at 595 nm at 160 seconds was chosen for the calibration curve. The result is shown in Table 2.

Table 2. Calibration plot for activity of $[Mn_2(\mu\text{-}O)_2(\mu\text{-}CH_3COO)(Me_4DTNE)]Cl_2$: absorbance of Acid Blue 45 dye at 595 nm after 160 seconds reaction time vs catalyst concentration.

| $[Mn_2(\mu\text{-}O)_2(\mu\text{-}CH_3COO)(Me_4DTNE)]\ Cl_2$ (in µM) | Absorbance 595 nm (a.u.) |
|---|---|
| 0 | 2.65 |
| 0.5 | 2.24 |
| 1.0 | 1.93 |
| 1.5 | 1.73 |
| 2.0 | 1.41 |
| 2.5 | 1.03 |
| $[Mn_2(\mu\text{-}O)_2(\mu\text{-}CH_3COO)(Me_4DTNE)]Cl_2$ (in µM) | Absorbance 595 nm (a.u.) |
| 3.0 | 0.87 |
| 4.0 | 0.55 |

**3.3 Direct UV-vis absorption measurements on amount of catalyst.**

The level of $[Mn_2(\mu\text{-}O)_3(Me_3TACN)_2]^{2+}$ adsorbed on a number of samples was assessed via UV-Vis measurements. Samples of the different solutions before and after adsorption of the catalyst on different silicates were diluted and analysed using an Agilent 8453 UV-Vis spectrophotometer.

The diluted solutions were prepared as follows:

Hollow spheres silicate produced in Experiment 1 a with catalyst: 60 µL of the diluted catalyst solution before adding to the silicate, was diluted further in 17.94 mL demineralized water. Another sample containing a filtered solution with the catalyst was taken after the adsorption process on silicate as outlined in experiment 2.1f.

Similarly for the catalyst-silicates prepared in Experiments 1 b-1 e: 120 µL of the diluted catalyst solutions before adding to the silicate, were diluted further in 17.8 mL demineralized water. Other samples containing the filtered solutions with the catalysts were taken after the adsorption processes on silicate as outlined in Experiment 2.1g-j.

The determination of the level of $[Mn_2(\mu\text{-}O)_3(Me_3TACN)_2]^{2+}$ was based on the Absorbance of the solutions at 244, 278 and 313 nm considering molar extinction coefficients of 19300, 18600 and 12000 $L.mol^{-1}.cm^{-1}$ respectively. A molecular weight of 500 g/mol was used for the $[Mn_2(\mu\text{-}O)_3(Me_3TACN)_2]^{2+}$.

Once done, the amount of catalyst adsorbed was calculated by subtracting the amount of catalyst left in solution after adsorption from the initial amount of catalyst present.

*n Catalyst adsorbed (mol) = n catalyst present initially (mol) – n catalyst after adsorption (mol)*

The weight of catalyst cation adsorbed was then calculated:

*Weight cation adsorbed (g) = n Catalyst adsorbed (mol) x 500 (g/mol)*

The comparison of the Weight of cation adsorbed with the amount of calcium silicate used (0.5g) gave the percentage of catalyst adsorbed on the different solids.

*% catalyst adsorbed = weight cation adsorbed / (weight silicate + weight catalyst adsorbed) x 100*

## 4 STORAGE STABILITY TESTS

### 4.1 Storage stability of $[Mn_2(\mu\text{-}O)_3(Me_3TACN)_2]^{2+}$ adsorbed on silicates

#### 4.1a Storage stability of $[Mn_2(\mu\text{-}O)_3(Me_3TACN)_2](CH_3COO)_2$ adsorbed on the silicate Microcal ET

Two sets of experiments were done, by using 3 mg and 6 mg Microcal ET with $[Mn_2(\mu\text{-}O)_3(Me_3TACN)_2](CH_3COO)_2$ adsorbed as described in Experiment 2.1a, which were added to 100 ml of the bleaching solution outlined in Experiment 3.1. Bleaching experiments were performed as shown in Experiment 3.1 and by using the calibration curve (see Experiment 3.1), the two sets of bleaching results were used to convert into released amount of catalyst. The average values are given below.

The freshly prepared silicate-catalyst sample released 1.21 wt-% of the catalyst during the bleaching experiment, which decreased to 0.72% after 9 weeks' storage at 50°C (i.e. 40% decrease in the level of catalyst released). The weight percentages given above are based on the relative weight of the cationic catalyst species (with molecular weight of 500 g/mol) vs. weight of silicate material. The molecular weight of 500 g/mol is of the molecular weight of the $[Mn_2(\mu\text{-}O)_3(Me_3TACN)_2]^{2+}$ complex (i.e. without counterions). Adsorption of the catalyst onto the calcium silicate leads to $Ca^{2+}$ release (as shown in Experiment 5), which suggests that the catalyst species adsorbed is the cationic species.

These data indicate that the catalyst adsorbed on the Microcal ET silicate material shows good storage stability, especially when compared to solid $[Mn_2(\mu\text{-}O)_3(Me_3TACN)_2]Cl_2.3H_2O$ (see experiment 4i below) and the experiment with Aerosil® 380 (see Experiment 4.1k below).

#### 4.1b Storage stability of $[Mn_2(\mu\text{-}O)_3(Me_3TACN)_2](CH_3COO)_2$ on magnesium silicate (ex Alfa Aesar)

The freshly prepared material released 1.18 wt-% of the catalyst during the bleaching experiment, which decreased to 0.7 wt-% after 9 weeks of storage at 50 °C. It should be noted that the behaviour of the magnesium silicate is very similar to that of Microcal ET. The stability of the catalyst is also much better than achieved by using silica material (Aerosil® 380) as adsorbing agent in which a similar decrease is found after 2 weeks' storage at 50 °C (see Experiment 4.1k below).

#### 4.1c Storage stability of $(Mn_2(\mu\text{-}O)_3(Me_3TACN)_2](CH_3COO)_2$ on magnesium silicate (Macrosorb MS15)

Similar experiments as described above (Experiment 4.1b) were done using a magnesium silicate material (Macrosorb MS15, PQ corporation) (Experiment 2.1c).

The freshly prepared material released about 0.4 wt-% of the catalyst during the bleaching experiment, which remained constant after 7.5 weeks of storage at 50 °C. Although the initial adsorption was slightly lower than the other magnesium silicate used in Experiment 2.1b/4.1b, the storage stability was very high.

#### 4.1d Storage stability of $[Mn_2(\mu\text{-}O)_3(Me_3TACN)_2](CH_3COO)_2$ on magnesium silicate (Macrosorb MS33, PQ corporation).

The freshly prepared material released 0.46 wt-% of the catalyst during the bleaching experiment, which decreased to 0.34 wt-% after 7.5 weeks' storage (i.e. a 25% decrease in the amount of catalyst released after 7.5 weeks at 50 °C). Although the initial adsorption was slightly lower than the other magnesium silicate used in Experiment 2.1b, the storage stability was also very high.

#### 4.1e Storage stability of $[Mn_2(\mu\text{-}O)_3(Me_3TACN)_2](CH_3COO)_2$ on hydrated magnesium silicate, talc (BDH Prolabo)

The freshly prepared material released 0.31 wt-% of the catalyst during the bleaching experiment, which decreased to about 0.2 wt-% after 7.5 weeks' storage at 50 °C. Although the initial adsorption was slightly lower than the other magnesium silicate used in Experiment 2.1b, the storage stability was still better than when adsorbed on silica (Experiment 4.1k).

#### 4.1f Storage stability of $(Mn_2(\mu\text{-}O)_3(Me_3TACN)_2](CH_3COO)_2$ on the hollow-sphere calcium silicate sample of Experiment 1a

The freshly prepared product prepared according Experiment 2.1f contained about 2.2 wt-% of $[Mn_2(\mu\text{-}O)_3(Me_3TACN)_2]^{2+}$ as assessed using UV-vis absorption spectroscopic measurements (see Experiment 3.3).

Storage stability tests were done using the BC-1 bleaching tests as outlined in Experiment 3.1, analogously to

those done in the experiments described above (see Experiment 4.1a).

The fresh material showed the presence of 1.9 wt-% of catalyst. After 4 weeks' storage at 50 °C the level was 1.3 wt-%.

**4.1g Storage stability of $[Mn_2(\mu\text{-}O)_3(Me_3TACN)_2](CH_3COO)_2$ on the calcium silicate sample of Experiment 1b**

The freshly prepared calcium silicate prepared according Experiment 2.1 g contained about 2.5 wt-% of $[Mn_2(\mu\text{-}O)_3(Me_3TACN)_2]^{2+}$ as assessed using UV-vis absorption spectroscopic measurements (see Experiment 3.3).

Storage stability tests were done using the BC-1 bleaching tests as outlined in Experiment 3.1, analogously to those done in the experiments described above (see Experiment 4.1 a).

The fresh material showed the presence of 2.6 wt-% of catalyst. After 4 weeks' storage at 50 °C the level was 1.0 wt-%.

**4.1.h Storage stability of $[Mn_2(\mu\text{-}O)_3(Me_3TACN)_2](CH_3COO)_2$ on the post-treated pH 9 calcium silicate sample of Experiment 1c**

The freshly prepared post-treated pH 9 calcium silicate according to Experiment 2.1h contained about 3.5 wt-% of $[Mn_2(\mu\text{-}O)_3(Me_3TACN)_2]^{2+}$ as assessed using UV-vis absorption spectroscopic measurements (see Experiment 3.3).

Storage stability tests were done using the BC-1 bleaching tests as outlined in Experiment 3.1, analogously to those done in the experiments described above (see Experiment 4.1 a).

The fresh material showed the presence of 3.3 wt-% of catalyst. After 4 weeks' storage at 50 °C the level was 2.6 wt-%.

**4.1.i Storage stability of $[Mn_2(\mu\text{-}O)_3(Me_3TACN)_2](CH_3COO)_2$ on the post-treated pH 10 calcium silicate sample of Experiment 1d**

The freshly prepared post-treated pH 10 calcium silicate according to experiment 2.1.i contained about 3.8 wt-% of $[Mn_2(\mu\text{-}O)_3(Me_3TACN)_2]^{2+}$ as assessed using UV-vis absorption spectroscopic measurements (see Experiment 3.3).

Storage stability tests were done using the BC-1 bleaching tests as outlined in Experiment 3.1, analogously to those done in the experiments described above (see Experiment 4.1 a).

The fresh material showed the presence of 2.8 wt-% of catalyst. After 4 weeks' storage at 50 °C the level was 1.5 wt-%.

**4.1.j Storage stability of $[Mn_2(\mu\text{-}O)_3(Me_3TACN)_2](CH_3COO)_2$ on the reinforced calcium silicate sample of Experiment 1e**

The freshly prepared reinforced calcium silicate according to Experiment 2.1j contained about 5.4 wt-% of $[Mn_2(\mu\text{-}O)_3(Me_3TACN)_2]^{2+}$ as assessed using UV-vis absorption spectroscopic measurements (see Experiment 3.3).

Storage stability tests were done using the BC-1 bleaching tests as outlined in Experiment 3.1, analogously to those done in the experiments described above (see Experiment 4.1a).

The fresh material showed the presence of 2.7 wt-% of catalyst. After 4 weeks' storage at 50 °C the level was 1.9 wt-%.

**4.1k Storage stability of $[Mn_2(\mu\text{-}O)_3(Me_3TACN)_2]CH_3COO)_2$ adsorbed on silica Aerosil® 380 - comparative test**

3 mg Aerosil® 380 with $[Mn_2(\mu\text{-}O)_3(Me_3TACN)_2](CH_3COO)_2$ adsorbed as shown in Experiment 2.1k was added to 100 ml of the bleaching solution outlined in Section 3.1.

The bleaching results obtained indicated, by making use of the calibration curve outlined in Section 3.1, that the freshly prepared and dried sample released approximately 3.7 wt-% of $[Mn_2(\mu\text{-}O)_3(Me_3TACN)_2]^{2+}$ to give bleaching of BC-1, whilst the sample that was stored for 1 week at 50 °C, showed that only 2 wt-% of catalyst is released from the silica material.

These data showed that the storage stability of the catalyst in the silica material was very poor compared to the Ca/Mg silicate materials as claimed (Experiments 4.1 a-4.1j).

**4.2 Storage stability of $[Mn_2(\mu\text{-}O)_2(\mu\text{-}CH_3COO)(Me_4DTNE)]^{2+}$ adsorbed on silicates**

**4.2a Storage stability of $[Mn_2(\mu\text{-}O)_2(\mu\text{-}CH_3COO)(Me_4DTNE)]Cl_2.H_2O$ on Microcal ET silicate**

3 mg Microcal ET with $[Mn_2(\mu\text{-}O)_2(\mu\text{-}CH_3COO)(Me_4DTNE)]Cl_2$ adsorbed as shown in Experiment 2.2a was added to 100 ml of the bleaching solution outlined in section 3.1. Using the calibration plot as presented in Table 1, it was shown that the fresh sample under the bleaching conditions used released 3.3 wt-% of the catalyst, whilst after 3 weeks' storage at 50 °C, the amount that was released corresponded to 3.1 wt-%.

Again, the weight percentages given above are based on the relative weight of the cationic catalyst species (with now a molecular weight of 541 g/mol vs. weight of silicate material.

This shows that the amount of catalyst degraded or inactivated was very small (approximately 10% after 3 weeks).

**4.2b Storage stability of $[Mn_2(\mu\text{-}O)_2(\mu\text{-}CH_3COO)(Me_4DTNE)]Cl_2.H_2O$ dissolved in acetate buffer pH 5 on Microcal ET silicate**

Dye bleaching experiments as outlined in Experiment 3.2 were done to assess the amount of $[Mn_2(\mu\text{-}O)_2(\mu\text{-}CH_3COO)(Me_4DTNE)]^{2+}$ released after different storage times of the silicate/catalyst material. After preparation of the silicate/catalyst material (see Experiment 2.2b), the material was stored at 50 °C in open vessel. Samples to be used for dye bleaching measurements were taken as follows. 5 mg of $(Mn_2(\mu\text{-}O)_2(\mu\text{-}CH_3COO)(Me_4DTNE)]Cl_2$ adsorbed on Microcal ET (Experiment 2.2b) was suspended in 2 mL of the 83.3 mM carbonate buffer pH 10.5. This suspension was stirred for 15 minutes at 30 °C. Then, the suspension was filtered over a 0.22 $\mu$m syringe filter (Millex-GV), this is the sample solution.

In a quartz cuvette, 1600 uL carbonate buffer pH 10.5 (83.3 mM), 100 uL Acid Blue 45 (2 g/L), 100 uL $H_2O_2$ (1 M), 100 uL DTPA (1.2 mM) and 100 uL of the sample solution were added.

The bleaching of the dye was followed using the Agilent 8453 UV-Vis spectrophotometer in the kinetic mode taking a spectrum every 30 seconds. The absorbance of the peak at 595 nm at 160 seconds was analysed, and using the calibration curve (Table 2) the concentration of $[Mn_2(\mu\text{-}O)_2(\mu\text{-}CH_3COO)(Me_4DTNE)]Cl_2$ per gram of solid material was calculated, after which the amount of catalyst cation per gram of calcium silicate was calculated (using a molecular weight of 541 g/mol for the dication). This procedure was repeated at different storage times at 50 °C. The results are in Table 3.

Table 3

| t (days) | $\mu$mol $[Mn_2(\mu\text{-}O)_2(\mu\text{-}CH_3COO)(Me_4DTNE)]Cl_2$ / gram Microcal ET silicate (wt-%) |
|---|---|
| 0 | 26.9 (1.45 wt-%) |
| 7 | 24.2 (1.31 wt-%) |
| 25 | 19.0 (1.03 wt-%) |
| 40 | 19.1 (1.03 wt-%) |
| 61 | 15.9 (0.86 wt-%) |
| 96 | 14.5 (0.79 wt-%) |

**4.2c Storage stability of $[Mn_2(\mu\text{-}O)_2(\mu\text{-}CH_3COO)(Me_4DTNE)]Cl_2$ adsorbed on silica Aerosil® 380 - comparative test**

3 mg Aerosil® 380 silica with $[Mn_2(\mu\text{-}O)_2(\mu\text{-}CH_3COO)(Me_4DTNE)]Cl_2$ adsorbed as shown in Experiment 2.2c was added to 100 ml of the bleaching solution outlined in Section 3.1.

The solid silica material released after adsorption and drying about 2.2 wt-% of the catalyst, $[Mn_2(\mu\text{-}O)_2(\mu\text{-}CH_3COO)(Me_4DTNE)]^{2+}$, in the bleaching reaction, which is a bit lower than when adsorbed on the Ca-silicate material (Experiment 4.2a).

After two weeks the amount of catalyst that leads to bleaching of tea stain has decreased to 1.8 wt-%, which is a much stronger decrease after two weeks' storage (about 20%) than for the catalyst adsorbed on Ca-silicate (less than 10% after 3 weeks' storage) - Experiment 4.2a.

**4.3a Storage stability of solid $[Mn_2(\mu\text{-}O)_3(Me_3TACN)_2]Cl_2.3H_2O$ (without being adsorbed on a silicate or silica material) - comparative test**

After 1 week's storage at 50 °C, a dark layer (probably $MnO_2$) had formed on the surface of the sample; the powder had also transformed into a solid mass. UV-vis analysis showed that the catalyst content had decreased by about 5%. Further storage (for another week at 50 °C) led to the formation of an oily solid.

**4.3b Storage stability of solid $[Mn_2(\mu\text{-}O)_2(\mu\text{-}CH_3COO)(Me_4DTNE)]Cl_2$ (without being adsorbed on a silicate or silica material) - comparative test.**

Based on bleaching experiments, it was observed that after 1 week storage at 50 °C, about 65 wt-% was decomposed, whilst after 4 weeks' storage 80% was decomposed. These data show, that under these high temperature storage conditions used for testing, the stability of the solid compound was much lower than those of the silicate-containing solid compounds.

**5 CALCIUM RELEASE EXPERIMENTS**

**Calcium determination in solutions**

Several stock solutions were prepared as follows:

- Calcium standard: 0.625 g calcium carbonate (obtained from Sigma Aldrich) was placed in a 100 mL volumetric flask and 2 mL hydrochloric acid 37% (Merck) were poured on the solid. The flask was swirled until all the solid had dissolved. The flask was then filled with demi water and shaken until the solution was homogeneous.
- Hydrochloric acid 0.8 M
- Cresolphtalein Complexone indicator: 18.75 mg Creseolphtalein (obtained from Sigma Aldrich) was placed in a 250 mL flask and 10 mL hydrochloric acid 0.8 M was added. The flask was swirled until all the solid had dissolved and 0.5 g 8-quinolinol (Sigma Aldrich) was introduced. The flask was swirled again until the 8-quinolinol had fully dissolved. Finally the flask was filled with demi water and the solution homogenised by shaking.
- Aminomethylpropanol buffer: 50 mL demineralised water was introduced in a 100 mL flask and 9 g of 2-amino-2-methyl-1-propanol (Sigma Aldrich) was added. The flask was swirled and demineralised water was poured to reach 100 mL.
- EGTA solution: 0.5 g Ethylene glycol-bis(2-aminoethylether)-*N*,*N*,*N'*,*N'*-tetraacetic acid (obtained from Sigma Aldrich) was placed in a 100 mL calibrated flask and demineralised water was added to reach 100 mL.

The first step of the method consisted in creating a calibration curve linking the level of calcium in solution with the Absorbance at 575 nm of the solution to analyse. To do so the following solutions were prepared:

- 0.2 mL calcium standard + 9.8 mL demineralised water
- 0.4 mL calcium standard + 9.6 mL demineralised water
- 0.6 mL calcium standard + 9.4 mL demineralised water
- 0.8 mL calcium standard + 9.2 mL demineralised water
- 1 mL calcium standard + 9 mL demineralised water

10 uL of each solution was then placed in quartz cuvettes followed by 1 mL of the cresolphtalein solution, 1 mL of aminomethylpropanol buffer and 1 mL of demineralised water. A blank was also realised by replacing the 10 uL of calcium solution by 10 uL demineralised water.

Stoppers were placed on top of the cuvettes before they were shaken and left to react for 5 minutes at room temperature. The absorbance at 575 nm of each cuvette was measured taking the cuvette containing the 10 uL demi water as a blank. At last a graph plotting the absorbance at 575 nm vs. the level of calcium in solution was realised.

The unknown samples were analysed in the same way. However, the levels of water and calcium solutions were adjusted so that the absorbance of the solution in the cuvette was around 0.3 (i.e. for solutions containing low concentrations of calcium, a higher volume of unknown solution is used while the volume of demineralised water in the cuvette is reduced to keep the total volume steady).

**5a Measurement of the level of calcium released by Microcal ET when placed in water for 30 minutes at room temperature.**

50 mL demineralised water was stirred in a beaker to form a vortex. Into this solution was poured Microcal ET (0.5 g) and the resultant mixture left to stir gently for 30 minutes at room temperature. The resultant liquid was separated from the solid by filtration and the filtrate was analyzed for calcium content (see procedure above). The concentration of calcium measured was equal to 9.4 mg/L.

**5b Measurement of the level of calcium released during adsorption of $[Mn_2(\mu\text{-}O)_3(Me_3TACN)_2]Cl_2.3H_2O$ on Microcal ET**

50 mL of a solution containing 0.67 mmol/L $[Mn_2(\mu\text{-}O)_3(Me_3TACN)_2]Cl_2.3H_2O$ in demineralized water was stirred in a beaker to form a vortex. 0.5 g of Microcal ET was poured on the walls of the vortex and the solution was left to react for 30 minutes at room temperature. The liquid was separated from the solid by filtration and the level of calcium was measured (see procedure above) and found to be equal to 27.2 mg/L.

It is clear that the level of calcium released from the silicate in presence of catalyst is higher than when the carrier is placed in water alone. This indicates that the calcium is exchanged for $Mn_2(\mu\text{-}O)_2(\mu\text{-}CH_3COO)(Me_4DTNE)]^{2+}$ during the adsorption phase.

**6 CONCLUSIONS FROM THE EXPERIMENTS**

The experiments described above indicate that efficient adsorption of the cationic manganese complexes can be achieved, similar to what was shown in the prior art (WO 95/30733) for adsorption of $[Mn_2(\mu\text{-}O)_3(Me_3\text{-}TACN)_2]^{2+}$ on silicas such as Gasil TP200 or G-type silica. The surprising difference is that, whilst the Aerosil® 380 silica material containing $[Mn_2(\mu\text{-}O)_3(Me_3\text{-}TACN)_2]^{2+}$ showed a fast decrease in the bleaching performance after 1 week storage at 50 °C (about 40% loss of catalyst level; Experiment 4.1k), the same manganese catalyst adsorbed on Microcal ET showed, even after 9 weeks' storage at 50 °C, a similar decrease in catalyst release (Experiment 4.1a).

Also various other alkaline earth metal silicates tested show a good storage stability after prolonged storage periods (7.5-9 weeks at 50 °C) (Experiments 4.1b-4.1j).

Further, compared to the pure solid catalyst as chloride salt ($[Mn_2(\mu\text{-}O)_3(Me_3\text{-}TACN)_2]Cl_2.3H_2O$) Experiment 4.3a), the stability of the compound adsorbed on the silicates is much higher.

Finally it should be noted that when mixing the catalyst with disodium metasilicate, a very high pH was found which led to a fast degradation of the catalyst. No additional storage stability was investigated. However, it is clear that sodium silicate materials are not suitable to make stable materials with the manganese catalysts.

Similar observations were made for $[Mn_2(\mu\text{-}O)_2(\mu\text{-}CH_3COO)(Me_4DTNE)]^{2+}$ which showed also a much better storage stability when stored as a silicate counterion (Experiments 4.2a and 4.2b), than as silica (Experiment 4.2c) or as solid material not adsorbed on silica or silicate (Experiment 4.3b).

Finally, the calcium determination experiments showed that the release of $Ca^{2+}$ ions was significantly higher when $[Mn_2(\mu\text{-}O)_3(Me_3\text{-}TACN)_2]^{2+}$ was adsorbed onto the Ca-silicate (Experiment 5b vs Experiment 5a).

Therefore, it has now surprisingly been found that Ca silicate-based materials lead to a good adsorption of the manganese catalysts, release of the catalyst when freshly prepared, but also a good release after prolonged storage at elevated temperatures.

## Claims

1. A method comprising:

   contacting, in an aqueous liquid, a calcium silicate with a salt comprising a mononuclear or dinuclear Mn (III) and/or Mn (IV) complex of a ligand of formula (I):

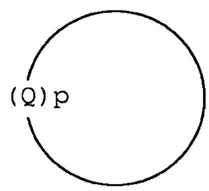

(I)

wherein:

Q=

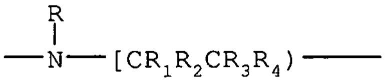

;

p is 3;

R is independently selected from the group consisting of hydrogen, $C_1$-$C_{24}$alkyl, $CH_2CH_2OH$ and $CH_2COOH$; or one R is linked to the nitrogen atom of another Q of another ring of formula (I) via a $C_2$-$C_6$ alkylene bridge, a $C_6$-$C_{10}$ arylene bridge or a bridge comprising one or two $C_1$-$C_3$ alkylene units and one $C_6$-$C_{10}$ arylene unit, which bridge may be optionally substituted one or more times with independently selected $C_1$-$C_{24}$ alkyl groups; and

$R_1$, $R_2$, $R_3$, and $R_4$ are independently selected from H, $C_1$-$C_4$alkyl and $C_1$-$C_4$-alkylhydroxy; and

drying the resultant composition,
wherein the salt comprises one or more non-coordinating counterions, which are selected from the group consisting of $Cl^-$, $NO_3^-$, $SO_4^{2-}$ and acetate.

**2.** The method of claim 1, wherein R is independently selected from the group consisting of hydrogen, $C_1$-$C_6$alkyl, $CH_2CH_2OH$ and $CH_2COOH$; or one R is linked to the nitrogen atom of another Q of another ring of formula (I) via an ethylene bridge.

**3.** The method of claim 1, wherein the ligand of formula (I) is 1,4,7-trimethyl-1,4,7-triazacyclononane ($Me_3$-TACN) or 1,2,-bis(4,7,-dimethyl-1,4,7,-triazacyclonon-1-yl)-ethane ($Me_4$-DTNE), for example wherein the complex is $[Mn^{IV}Mn^{IV}(\mu\text{-}O)_3(Me_3\text{-}TACN)_2]^{2+}$ or $[Mn^{III}Mn^{IV}(\mu\text{-}O)_2(\mu\text{-}CH_3COO)(Me_4\text{-}DTNE)]^{2+}$.

**4.** A composition obtainable by a method as defined in any one preceding claim.

**5.** The composition of any one preceding claim, the solid content of which comprises between about 0.1 and about 20 % by weight of the mononuclear or dinuclear Mn (III) and/or Mn (IV) complex.

**6.** A bleaching formulation comprising a composition obtainable by the method of any one of claims 1 to 3; and optionally a peroxy compound.

**7.** A method comprising contacting a substrate with water and a bleaching formulation as defined in claim 6.

**8.** The method of claim 7, which is a method of cleaning dishes in a mechanical dishwasher, the method comprising contacting the dishes with water and the bleaching formulation.

**9.** The method of claim 7, which is a method of cleaning textiles or non-woven fabrics, the method comprising contacting a textile or a non-woven fabric with water and the bleaching formulation.

**Patentansprüche**

**1.** Verfahren umfassend:

das In-Kontakt-Bringen in einer wässrigen Flüssigkeit, eines Calciumsilicats mit einem Salz, umfassend einen mononukleären oder dinukleären Mn(III)- und/oder Mn(IV)-Komplex eines Liganden der Formel (I):

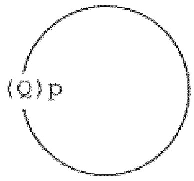 (I)

wobei

Q=

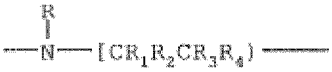 ;

p 3 beträgt;
R unabhängig aus der Gruppe ausgewählt ist bestehend aus Wasserstoff, $C_1$-$C_{24}$-Alkyl, $CH_2CH_2OH$ und $CH_2COOH$; oder ein R mit dem Stickstoffatom eines anderen Q eines anderen Rings der Formel (I) über eine $C_2$-$C_6$-Alkylenbrücke, eine $C_6$-$C_{10}$-Arylenbrücke oder eine Brücke, die eine oder zwei $C_1$-$C_3$-Alkyleneinheiten und eine $C_6$-$C_{10}$-Aryleneinheit umfasst, verknüpft ist, welche Brücke wahlweise einmal oder mehr mit unabhängig ausgewählten $C_1$-$C_{24}$-Alkylgruppen substituiert sein kann; und
$R_1$, $R_2$, $R_3$ und $R_4$ unabhängig ausgewählt sind aus H, $C_1$-$C_4$-Alkyl und $C_1$-$C_4$-Alkylhydroxy; und

Trocknen der resultierenden Zusammensetzung;
wobei das Salz ein oder mehrere nicht koordinierende Gegenionen umfasst, ausgewählt aus der Gruppe bestehend aus $Cl^-$, $NO_3^-$, $SO_4^{2-}$ und Acetat.

2. Verfahren nach Anspruch 1, wobei R unabhängig aus der Gruppe ausgewählt ist bestehend aus Wasserstoff, $C_1$-$C_6$-Alkyl, $CH_2CH_2OH$ und $CH_2COOH$; oder ein R mit dem Stickstoffatom eines anderen Q eines anderen Rings der Formel (I) über eine Ethylenbrücke verknüpft ist.

3. Verfahren nach Anspruch 1, wobei der Ligand der Formel (I) 1,4,7-Trimethyl-1,4,7-triazacyclononan ($Me_3$-TACN) oder 1,2-Bis(4,7-dimethyl-1,4,7-triazacyclonon-1-yl)-ethan ($Me_4$-DTNE) ist, wobei beispielsweise der Komplex $[Mn^{IV}Mn^{IV}(\mu\text{-}O)_3(Me_3\text{-}TACN)_2]^{2+}$ oder $[Mn^{III}Mn^{IV}(\mu\text{-}O)_2(\mu\text{-}CH_3COO)Me_4\text{-}DTNE)]^{2+}$ ist.

4. Zusammensetzung, die durch ein Verfahren wie in einem der vorhergehenden Ansprüche definiert, erhältlich ist.

5. Zusammensetzung nach einem der vorhergehenden Ansprüche, deren Feststoffgehalt zwischen etwa 0,1 und etwa 20 Gew.-% des mononukleären oder dinukleären Mn(III)- und/oder Mn(IV)-Komplexes umfasst.

6. Bleichformulierung umfassend eine Zusammensetzung, die durch das Verfahren nach einem der Ansprüche 1 bis 3 erhältlich und wahlweise eine Peroxyverbindung ist.

7. Verfahren umfassend das In-Kontakt-Bringen eines Substrats mit Wasser und einer Bleichformulierung, wie in Anspruch 6 definiert.

8. Verfahren nach Anspruch 7, das ein Verfahren zum Reinigen von Geschirr in einer Spülmaschine ist, wobei das Verfahren das In-Kontakt-Bringen des Geschirrs mit Wasser und der Bleichformulierung umfasst.

9. Verfahren nach Anspruch 7, das ein Verfahren zum Reinigen von Textilstoffen oder Vliesstoffen ist, wobei das Verfahren das In-Kontakt-Bringen eines Textilstoffs oder eines Vliesstoffs mit Wasser und der Bleichformulierung umfasst.

**Revendications**

1. Procédé comprenant:

la mise en contact, dans un liquide aqueux, d'un silicate de calcium avec un sel comprenant un complexe mononucléaire ou dinucléaire Mn(III) et/ou Mn(IV) d'un ligand de formule (I):

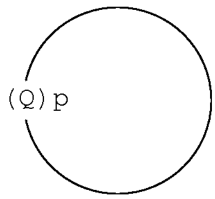

(I)

où:

Q=

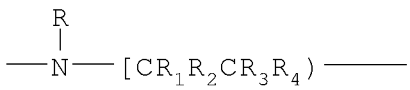

;

p a la valeur de 3;
R est indépendamment sélectionné dans le groupe constitué d'hydrogène, d'un groupe alkyle en $C_1$ à $C_{24}$, de $CH_2CH_2OH$ et de $CH_2COOH$; ou un R est lié à l'atome d'azote d'un autre Q d'un autre cycle de formule (I) via un pont alcylène en $C_2$ à $C_6$, un pont arylène en $C_6$ à $C_{10}$ ou un pont comprenant un ou deux motifs alcylène en $C_1$ à $C_3$ et un motif arylène en $C_6$ à $C_{10}$, lequel pont peut être optionnellement substitué une ou plusieurs fois par des groupes alkyle en $C_1$ à $C_{24}$ indépendamment sélectionnés; et
$R_1$, $R_2$, $R_3$, et $R_4$ sont indépendamment sélectionnés parmi H, un groupe alkyle en $C_1$ à $C_4$ et alkylhydroxy en $C_1$ à $C_4$ ;

séchage de la composition résultante,
où le sel comprend un ou plusieurs contre-ions non coordinants, qui sont sélectionnés dans le groupe constitué de Cl-, $NO_3$, $SO_4^{2-}$ et acétate.

2. Procédé selon la revendication 1, dans lequel R est indépendamment sélectionnés dans le groupe constitué d'hydrogène, d'alkyle en $C_1$-$C_6$, de $CH_2CH_2OH$ et de $CH_2COOH$; ou un R est lié à l'atome d'azote d'un autre Q d'un autre cycle de formule (I) via un pont éthylène.

3. Procédé selon la revendication 1, dans lequel le ligand de formule (I) est le 1,4,7-triméthyl-1,4,7-triazacyclononane ($Me_3$-TACN) ou le 1,2,-bis(4,7,-diméthyl-1,4,7,-triazacyclonon-1-yl)-éthane ($Me_4$-DTNE), par exemple dans lequel le complexe est $[M^{IV}Mn^{IV}(\mu\text{-}O)_3(Me_3\text{-}TACN)_2]^{2+}$ ou $[Mn^{III}Mn^{IV}(\mu\text{-}O)_2(\mu\text{-}CH_3COO)(Me_4\text{-}DTNE)]^{2+}$.

4. Composition pouvant être obtenue par un procédé tel que défini selon l'une quelconque des revendications précédentes.

5. Composition selon l'une quelconque des revendications précédentes, dont la teneur en solide comprend entre environ 0,1 et environ 20% en poids du complexe mononucléaire ou dinucléaire Mn(III) et/ou Mn(IV).

6. Formulation de blanchiment comprenant une composition pouvant être obtenue par le procédé selon l'une quelconque des revendications 1 à 3; et optionnellement un composé peroxy.

7. Procédé comprenant la mise en contact d'un substrat avec de l'eau et une formulation de blanchiment telle que définie selon la revendication 6.

8. Procédé selon la revendication 7, qui est un procédé de nettoyage de vaisselle dans un lave-vaisselle mécanique, le procédé comprenant la mise en contact de la vaisselle avec de l'eau et la formulation de blanchiment.

9. Procédé selon la revendication 7, qui est un procédé de nettoyage de textiles ou de textiles non-tissés, le procédé comprenant la mise en contact d'un textile ou d'un textile non-tissé avec de l'eau et la formulation de blanchiment.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0458397 A2
- WO 2006125517 A1
- EP 0544440 A2
- WO 9421777 A1
- WO 9506710 A1
- WO 9506711 A1
- WO 9530733 A1
- EP 0549271 A1
- EP 0549272 A1
- EP 0544519 A2
- WO 2011106906 A1
- WO 9507972 A1
- GB 836988 A
- GB 864798 A
- GB 907356 A
- GB 1003310 A
- GB 1519351 A
- EP 0185522 A
- EP 0174132 A
- EP 0120591 A
- US 1246339 A
- US 3332882 A
- US 4128494 A
- US 4412934 A
- US 4675393 A
- US 4751015 A
- US 4397757 A
- EP 0284292 A
- EP 0331229 A
- EP 0303520 A
- EP 0458396 A
- EP 0464880 A
- WO 0015750 A1
- WO 03072690 A1
- WO 02068574 A1
- WO 2012048951 A1
- US 6579839 B, Price
- WO 0034427 A1
- EP 0384070 A
- EP 2228429 A1
- WO 2012071153 A1
- WO 2006078176 A1
- EP 0909809 B
- WO 9530733 A


### Non-patent literature cited in the description


- **SCHWARTZ ; PERRY.** Surfactant Active Agents. Interscience, 1949, vol. 1
- **SCHWARTZ ; PERRY ; BERCH.** SURFACTANT ACTIVE AGENTS. Interscience, 1958, vol. 2
- McCutcheon's Emulsifiers and Detergents. Manufacturing Confectioners Company
- **H. STACHE.** Tenside Taschenbuch. Carl Hauser Verlag, 1981
- Recommendations of the Nomenclature Committee of the. Enzyme Nomenclature. International Union of Biochemistry, 1992
- Molecular Biology on the Nomenclature and Classification of Enzymes. Academic Press, 1992
- **M. ZHANG ; J. CHANG.** *Ultrasonics Sonochemistry,* 2010, vol. 17, 789-792
- **T. BORRMANN et al.** *J. Colloid and Interface Science,* 2009, vol. 339, 175-182